# EUROPEAN PATENT APPLICATION

(11) **EP 4 064 786 A1**
(43) Date of publication of application: **28.09.2022**
(21) Application number: 21164227.7
(22) Date of filing: 23.03.2021
(51) Int. Cl.: H04W 76/27, H04W 4/70, H04W 74/08

(54) **USER EQUIPMENT AND BASE STATION INVOLVED IN TRANSMISSION OF SMALL DATA**

(71) Applicant: Panasonic Intellectual Property Corporation of America, Torrance, CA 90503 (US)
(72) Inventor: SHAH, Rikin, 63225 Langen (DE); SUZUKI, Hidetoshi, Osaka-shi,, Osaka 540-6207 (JP); TAO, Ming-Hung, 63225 Langen (DE)
(74) Representative: Grünecker Patent- und Rechtsanwälte PartG mbB

(57) **Abstract**

The present disclosure relates to a user equipment, UE, comprising the following. A processor determines a first data volume threshold and determines to transmit small data, available for transmission, in an inactive state or in a connected state, based on a volume of the available small data and the first data volume threshold. A transmitter performs transmission of the available small data. The first data volume threshold is to be used for determining whether to perform the transmission of available small data in the inactive state using periodic radio resources that are usable for transmission of small data without a prior scheduling request from the UE, the periodic radio resources being allocated in advance by a serving base station. On the other hand, the first data volume threshold is not to be used for determining whether to perform a random-access-based transmission of available small data in the inactive state.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 16.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

### SUMMARY

One non-limiting and exemplary embodiment facilitates providing procedures for facilitating a UE to perform an improved small-data transmission.

In an embodiment, the techniques disclosed here feature a user equipment, UE, comprising the following. A processor of the UE determines a first data volume threshold. The processor determines to transmit small data, that became available for transmission, in an inactive state or in a connected state, based on a volume of the available small data and the first data volume threshold. The UE is in the inactive state out of the connected state, an idle state and the inactive state. A transmitter of the UE performs transmission of the available small data. The first data volume threshold is to be used for determining whether to perform the transmission of available small data in the inactive state using periodic radio resources that are usable for transmission of small data without a prior scheduling request from the UE, the periodic radio resources being allocated in advance by a serving base station. On the other hand, the first data volume threshold is not to be used for determining whether to perform a random-access-based transmission of available small data in the inactive state. It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig.** 1: shows an exemplary architecture for a 3GPP NR system;
- **Fig.** 2: is a schematic drawing that shows a functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6 and 7**: illustrate the contention-based and contention-free RACH procedure;
- **Fig. 8**: illustrates the possible RRC state changes,
- **Fig. 9**: illustrates a message exchange of the prior art for uplink data transmission, including a state change of the UE from Inactive to Connected state;
- **Fig. 10 and 11**: illustrate an exemplary four-step RACH respectively two-step RACH usable for small-data uplink transmissions for an RRC_INACTIVE UE,
- **Fig. 12**: illustrates different configured grants and to UEs use the configured grant resources for transmission of small data
- **Fig. 13**: illustrates an exemplary and simplified structure of a UE and gNB,
- **Fig. 14**: illustrates a structure of the UE according to an exemplary implementation of an improved small-data transmission procedure,
- **Fig. 15**: is a flow diagram for the UE behavior, according to an exemplary implementation of the improved small-data transmission procedure,
- **Fig. 16**: illustrates a structure of the base station that participates in the exemplary implementation of the improved small-data transmission procedure,
- **Fig. 17**: is a flow diagram for the base station behavior that participates in the exemplary implementation of the improved small-data transmission procedure,
- **Fig. 18**: is a flow diagram for the base station behavior that participates in a first solution of the improved small-data transmission procedure,
- **Fig. 19**: is a flow diagram for the UE behavior that participates in a first solution of the improved small-data transmission procedure,
- **Fig. 20**: is a flow diagram for the UE behavior that participates in another variant of the first solution of the improved small-data transmission procedure,
- **Fig. 21**: is a flow diagram for the UE behavior that participates in a second solution of the improved small-data transmission procedure,
- **Fig. 22**: is a flow diagram for the base station behavior that participates in a second solution of the improved small-data transmission procedure,
- **Fig. 23**: is a flow diagram for the base station behavior that participates in a third solution of the improved small-data transmission procedure,
- **Fig. 24**: is a flow diagram for the UE behavior that participates in a third solution of the improved small-data transmission procedure,
- **Fig. 25**: is a flow diagram for the UE behavior that participates in a fourth solution of the improved small-data transmission procedure, and
- **Fig. 26**: is a flow diagram for the base station behavior that participates in a fourth solution of the improved small-data transmission procedure.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

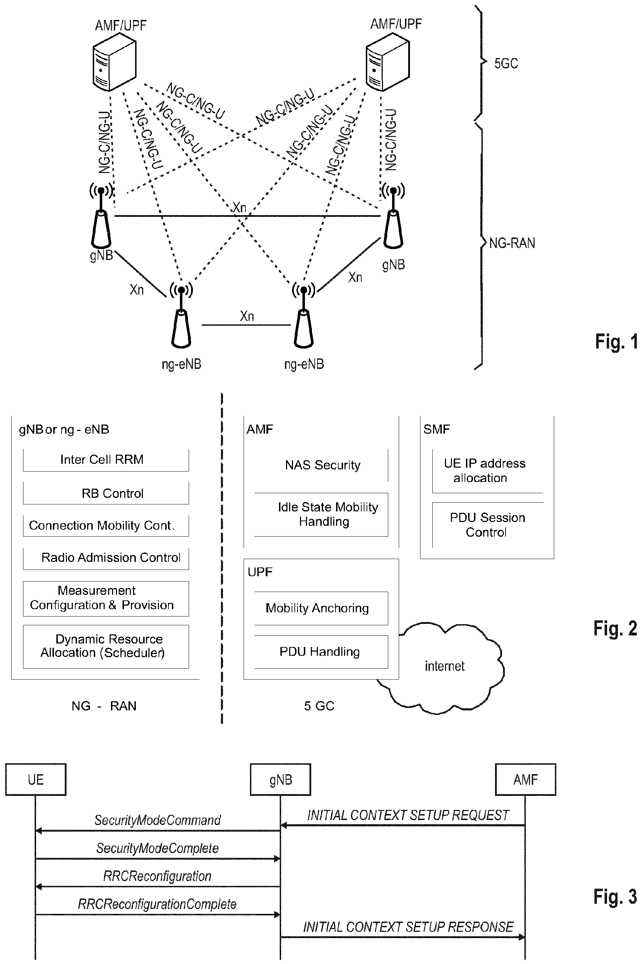

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.4.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.4.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

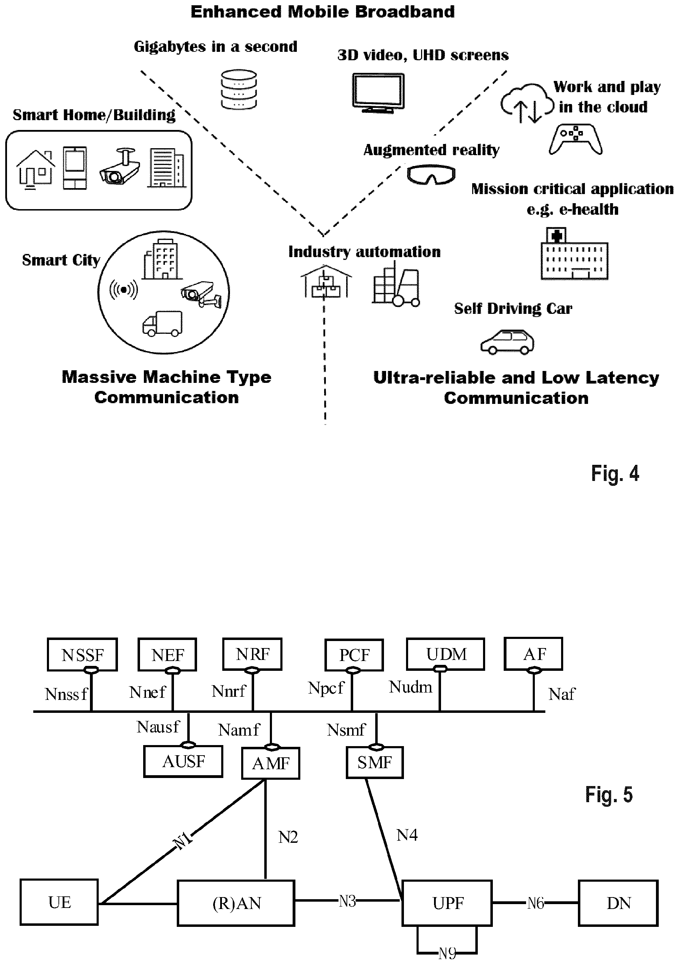

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see 3GPP TS 23.501 v16.7.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within 5G NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPP TS 38.300, v 16.4.0 section 9.2.6), including the following. The random access procedure is triggered by a number of events:
- Initial access from RRC_IDLE;
- RRC Connection Re-establishment procedure;
- DL or UL data arrival during RRC_CONNECTED when UL synchronisation status is "non-synchronised";
- UL data arrival during RRC_CONNECTED when there are no PUCCH resources for SR available;
- SR failure;
- Request by RRC upon synchronous reconfiguration (e.g. handover);
- Transition from RRC_INACTIVE;
- To establish time alignment for a secondary TAG;
- Request for Other SI (see clause 7.3);
- Beam failure recovery;
- Consistent UL LBT failure on SpCell.

A mobile terminal can be scheduled for uplink transmission, if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access procedure is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access procedure in order to achieve uplink time-synchronization in the target cell.

There can be at least two types of random access procedures, allowing access to be either contention based (i.e. implying an inherent risk of collision), or contention free (non-contention based). An exemplary definition of a random access procedure can be found in 3GPP TS 38.321, v16.3.0 section 5.1.

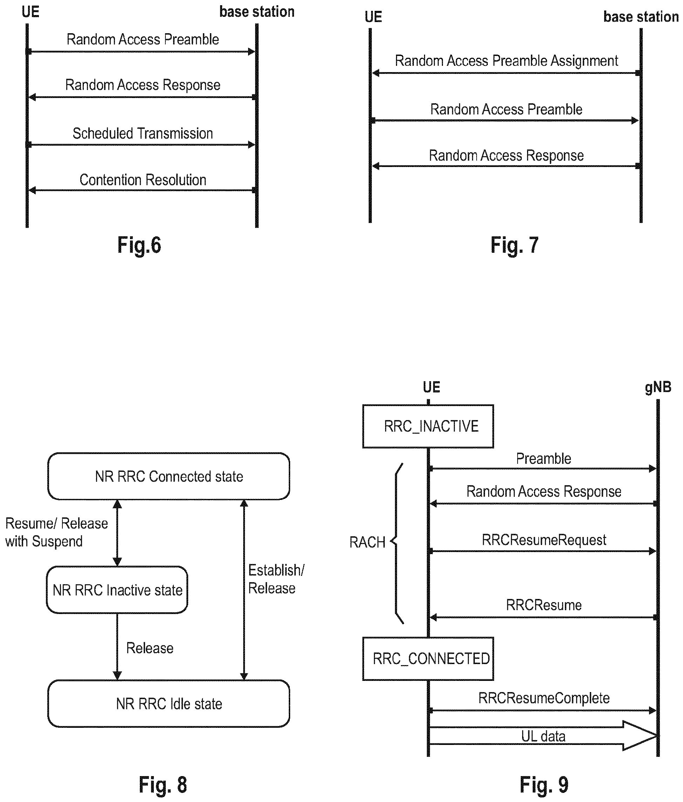

The RACH procedure will be described in the following in more detail, with reference to **Fig. 6 and 7****.** In the following, the contention-based random access procedure is being described in more detail with respect to **Fig. 6****.** This procedure consists of four "steps" and thus can be termed for example a 4-step RACH procedure. First, the user equipment transmits a random access preamble on the Physical Random Access Channel (PRACH) to the base station (i.e. message 1 of the RACH procedure). After the base station has detected a RACH preamble, it sends a Random Access Response (RAR) message (message 2 of the RACH procedure) on the PDSCH (Physical Downlink Shared Channel) addressed on the PDCCH with the (Random Access) RA-RNTI identifying the time-frequency and slot in which the preamble was detected. If multiple user equipments transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions based on the timing of the received preamble, an initial uplink resource assignment (grant) for the transmission of the first scheduled transmission and an assignment of a Temporary Cell Radio Network Temporary Identifier (T-CRNTI). This T-CRNTI is used by the base station to address the mobile(s) whose RACH preamble was detected until the RACH procedure is finished, because the "real" identity of the mobile at this point is not yet known by the base station.

The user equipment monitors the PDCCH for reception of the random access response message within a given time window (e.g. termed RAR reception window), which can be configured by the base station. In response to the RAR message received from the base station, the user equipment transmits the first scheduled uplink transmission on the radio resources assigned by the grant within the random access response. This scheduled uplink transmission conveys the actual message with certain functionality such as the RRC Connection Request, a RRC Resume Request or the buffer status report.

In case of a preamble collision having occurred in the first message of the RACH procedure (i.e. multiple user equipments sent the same preamble on the same PRACH resource), the colliding user equipments will receive the same T-CRNTI within the random access response and will also collide in the same uplink resources when transmitting their scheduled transmission in the third step of the RACH procedure. In case the scheduled transmission from one user equipment is successfully decoded by the base station, the contention remains unsolved for the other user equipment(s). For resolution of this type of contention, the base station sends a contention resolution message (a fourth message) addressed to the C-RNTI or Temporary C-RNTI. This concludes the procedure.

**Fig. 7** illustrates the contention-free random access procedure, which is simplified in comparison to the contention-based random access procedure. The base station provides in a first step the user equipment with the dedicated preamble to use for random access so that there is no risk of collisions, i.e. multiple user equipments transmitting the same preamble. Accordingly, the user equipment subsequently sends the preamble that was signaled by the base station in the uplink on a PRACH resource. Since the case that multiple UEs are sending the same preamble is avoided for a contention-free random access, essentially, a contention-free random access procedure is finished after having successfully received the random access response by the UE.

3GPP also defines a 2-step (contention-based) RACH procedure for 5G NR, where a message 1 (termed as MsgA), that corresponds to messages 1 and 3 in the four-step LTE/NR RACH procedure, is transmitted at first. The MsgA of the 2-step RACH type includes a preamble on the Physical Random Access Channel (PRACH) and a payload on the Physical Uplink Shared Channel (PUSCH). After MsgA transmission, the UE monitors for a response from the gNB within a configured time window. Then, the gNB will respond with a message 2 (termed as MsgB), corresponding to messages 2 and 4 of the 4-step LTE/NR RACH procedure. This MsgB can include e.g. a Success random access response (RAR), a Fallback RAR, and optionally a backoff indication. If contention resolution is successful upon receiving the Success RAR, the UE ends the random access procedure; if Fallback RAR is received in MsgB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MsgA.

Moreover, the network may semi-statically determine radio resources, to be used for performing the 2-step RACH procedure and the 4-step RACH procedure, that are exclusive from one another. The radio resources used for transmitting the first message in the RACH procedure include at least the RACH occasion as well as the preambles. For instance, in the 2-step RACH procedure, the first message MsgA uses not only the PRACH resource (e.g. the RACH occasion and preamble) but also the associated PUSCH resources.

Generally, for RACH preambles, see for example, 3GPP TS 38.211 V16.4.0, "Table 6.3.3.2-2: Random access configurations for FR1 and paired spectrum/supplementary uplink" and section 6.3.3.2, "Mapping to physical resources".

### RRC States (RRC_Connected, RRC_Inactive)

In LTE, the RRC state machine consisted of only two states, the RRC idle state (mainly characterized by high power savings, UE autonomous mobility and no established UE connectivity towards the core network) and the RRC connected state in which the UE can transmit user plane data while mobility is network-controlled to support lossless service continuity. In connection with 5G NR, the LTE-related RRC state machine is extended with an inactive state (see e.g. TS 38.331 v16.3.1, Figures 4.2.1-1 and 4.2.1-2), as explained in the following.

The RRC in NR 5G (see TS 38.331, section 4) supports the following three states, RRC Idle, RRC Inactive, and RRC Connected. A UE is either in RRC_CONNECTED state or in RRC_INACTIVE state when an RRC connection has been established. If this is not the case, i.e. no RRC connection is established, the UE is in RRC_IDLE state. The following state transitions are possible as illustrated in **Fig. 8****:**
- from RRC_IDLE to RRC_CONNECTED, following e.g. the "connection establishment" procedure;
- from RRC_CONNECTED to RRC_IDLE, following e.g. the "connection release" procedure;
- from RRC_CONNECTED to RRC_INACTIVE, following e.g. the "connection release with suspend" procedure;
- from RRC_INACTIVE to RRC_CONNECTED, following e.g. the "connection resume" procedure;
- from RRC_INACTIVE to RRC_IDLE (uni-directional), following e.g. the "connection release" procedure.

The new RRC state, RRC Inactive, is defined for the new radio technology of 5G 3GPP, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. The new RRC Inactive state shall thus be designed to allow minimizing signaling, power consumption and resource costs in the radio access network and core network while still allowing e.g. to start data transfer with low delay.

According to an exemplary 5G NR implementation, the different states are characterized as follows (see section 4.2.1 of TS 38.331):
***"RRC_IDLE:***
- *A UE specific DRX may be configured by upper layers;*
- *UE controlled mobility based on network configuration;*
- *The UE:*
   - *Monitors Short Messages transmitted with P-RNTI over DCI (see clause 6.5);*
   - *Monitors a Paging channel for CN paging using 5G-S-TMSI;*
   - *Performs neighbouring cell measurements and cell (re-)selection;*
   - *Acquires system information and can send SI request (if configured).*
   - *Performs logging of available measurements together with location and time for logged measurement configured UEs.*
- ***RRC_INACTlVE:***
   - *A UE specific DRX may be configured by upper layers or by RRC layer;*
   - *UE controlled mobility based on network configuration;*
   - *The UE stores the UE Inactive AS context;*
   - *A RAN-based notification area is configured by RRC layer;*
      *The UE:*
      - *Monitors Short Messages transmitted with P-RNTI over DCI (see clause 6.5);*
      - *Monitors a Paging channel for CN paging using 5G-S-TMSI and RAN paging using fulll-RNTI;*
      - *Performs neighbouring cell measurements and cell (re-)selection;*
      - *Performs RAN-based notification area updates periodically and when moving outside the configured RAN-based notification area;*
      - *Acquires system information and can send SI request (if configured).*
      - *Performs logging of available measurements together with location and time for logged measurement configured UEs.*
- ***RRC_CONNECTED:***
   - *The UE stores the AS context;*
   - *Transfer of unicast data to*/*from UE;*
   - *At lower layers, the UE may be configured with a UE specific DRX;*
   - *For UEs supporting CA, use of one or more SCells, aggregated with the SpCell, for increased bandwidth;*
   - *For UEs supporting DC, use of one SCG, aggregated with the MCG, for increased bandwidth;*
   - *Network controlled mobility within NR and to*/*from E-UTRA;*
   - *The UE:*
      - *Monitors Short Messages transmitted with P-RNTI over DCI (see clause 6.5), if configured;*
      - *Monitors control channels associated with the shared data channel to determine if data is scheduled for it;*
      - *Provides channel quality and feedback information;*
      - *Performs neighbouring cell measurements and measurement reporting;*
      - *Acquires system information;*
      - *Performs immediate MDT measurement together with available location reporting."*

According to the characteristics of the RRC Inactive state, for the Inactive UE the connection (both for user plane and control plane) is maintained with RAN and the core network. More specifically, in RRC Inactive, although the connection still exists, it is suspended, or put differently the connection is not active anymore. On the other hand, in RRC Connected state, the connection exists and is active, e.g. in the sense that it is used for a data transmission. In RRC Idle state, the UE has no RRC connection with the RAN and the core network, which also means that e.g. the radio base station does not have any context of the UE and e.g. does not know the identification of the UE and does not have security parameters relating to the UE to be able to properly decode data transmitted by the UE (security e.g. ensures integrity of the transmitted data). UE context may be available in the core network, but would have to be fetched first by the radio base station.

In addition, the paging mechanism (may also be called e.g. notification mechanism) for user equipments in the radio cell is based on so called radio access network, RAN,-based notification areas (in short RNAs). The radio access network should be aware of the current RNA the user equipment is located in, and the user equipment may assist the gNB to track the UE moving among various RNAs. The RNA can be UE-specific.

### Configured grant, grant free access, grant free uplink

Uplink data transmissions typically require resources being requested by the UE, followed by a packed scheduling decision and resource allocation at the scheduling side (e.g. base station). The allocation cycle causes an additional delay and signaling. The radio resource allocation delay between the UE and the base station can be avoided by allowing the UE to use radio resources without previously requesting same from the base station.

In LTE, semi-persistent-scheduling (SPS) functionality was introduced, being particularly useful for periodic data transmissions such as Voice over IP (VoIP) services. A base station configures the SPS radio resources, and the UE can use these periodic radio resources, without an additional scheduling request procedure. However, the LTE SPS configuration is dedicated to a single device. If the device does not need the allocated periodic resources (e.g. data is only transmitted for specific events, such as a collision warning), the SPS resources that are no used by the UE are wasted.

In 5G NR, grant-free access, which is also known as transmission without grant (TWG), has been introduced in 5G NR, where the UE is also allowed to send data without prior scheduling (e.g. without the UE sending a corresponding resource request). Again, this approach may allow for minimizing latency and the respective signaling.

Specifically, multiple devices (UEs) may be allowed to share periodic radio resources, called a configured grant (CG) (which facilitates reducing the waste of the periodic radio resources compared to the LTE SPS). The gNB allocates configured-grant radio resources to multiple UEs, which then randomly utilize the periodic radio resources when they have to transmit data (e.g. small data, see later sections). With the CG, the network eliminates packet transmission delays caused by a specific scheduling request procedure that would have to be performed otherwise before being able to send data. Thereby, the utilization ratio of allocated periodic radio resources may be increased as well.

There are two types of grant free configuration schemes supported in 3GPP Release 16 (see 3GPP 38.300 v16.4.0: "NR; NR and NG-RAN Overall Description; Stage 2 (Release 16)", section 10.3).

According to this exemplary implementation of TS 38.300, using the Type-1 CG, the RRC directly provides the configured uplink grant including its periodicity.

With a configured grant of Type 2, the RRC defines the periodicity of the configured uplink grant while a PDCCH message addressed to the CS-RNTI can either signal and activate the configured uplink grant, or deactivate it; a PDCCH addressed to the CS-RNTI indicates that the uplink grant can be implicitly reused according to the periodicity defined by RRC, until deactivated. In other words, an additional L1 signaling (e.g. the PDCCH) is introduced, where the uplink is semi-persistently scheduled by an RRC-based uplink grant that is activated/deactivated by a (de)activation DCI. RRC provides the higher layer parameters.

In both cases, according to the exemplary 3GPP implementation, the RRC provides the grant configuration to the UE through a higher-layer parameter called *ConfiguredGrantConfig.* (see TS 38.331 v16.3.1, section 6.3.2 *"RRC Information Elements").* The following definitions of the RRC information elements *ConfiguredGrantConfig* and *ConfiguredGrantConfiglndex* are extracted from the cited TS 38.331 v16.3.1, and are only to be considered as an example of how the configured grant can be configured by the gNB.

### ConfiguredGrantConfig

The IE *ConfiguredGrantConfig* is used to configure uplink transmission without dynamic grant according to two possible schemes. The actual uplink grant may either be configured via RRC (*type1*) or provided via the PDCCH (addressed to CS-RNTI) *(type2).* Multiple Configured Grant configurations may be configured in one BWP of a serving cell.

### ConfiguredGrantConfig information element

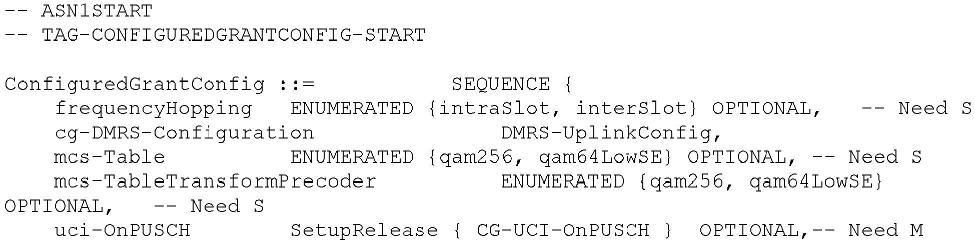

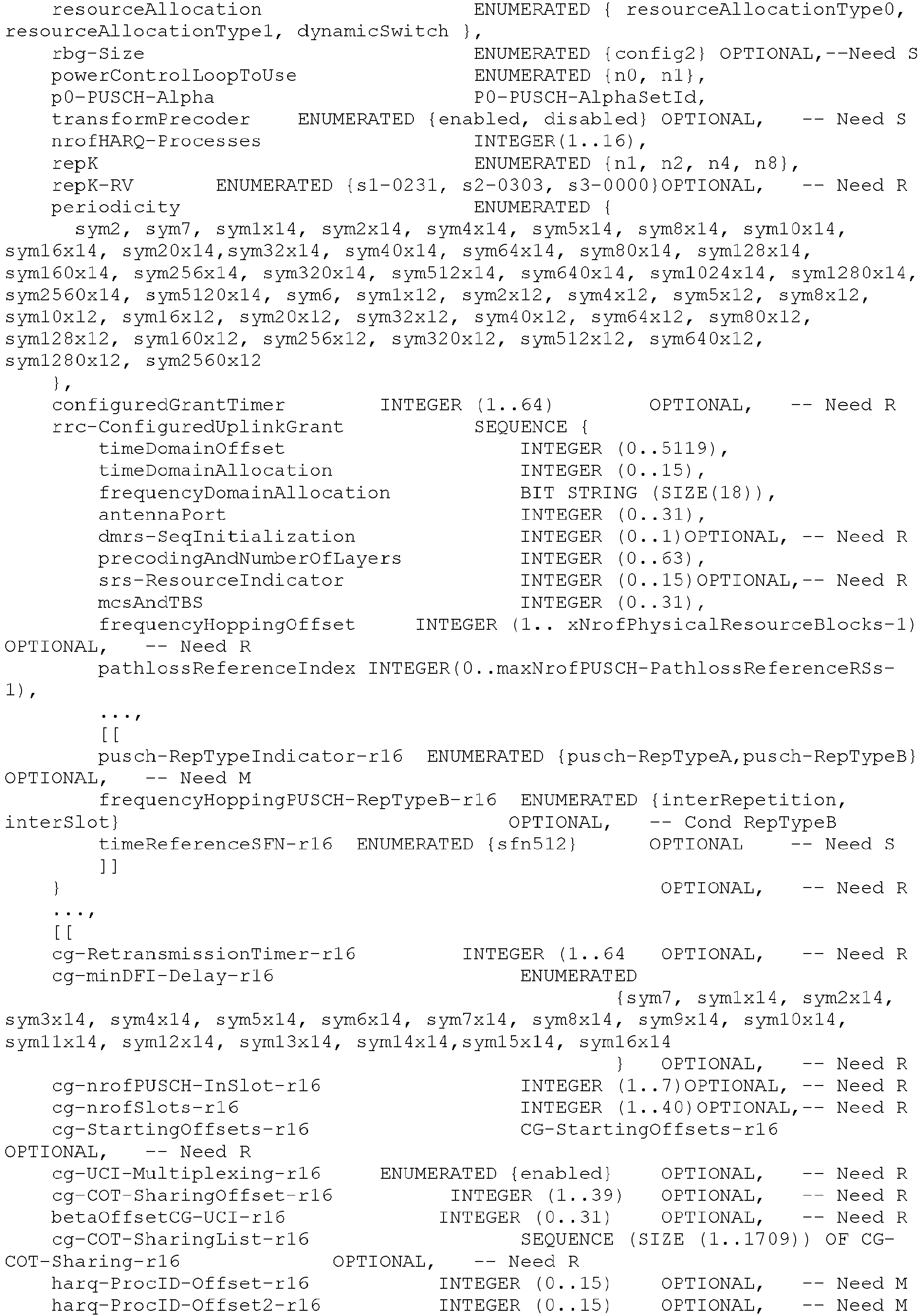

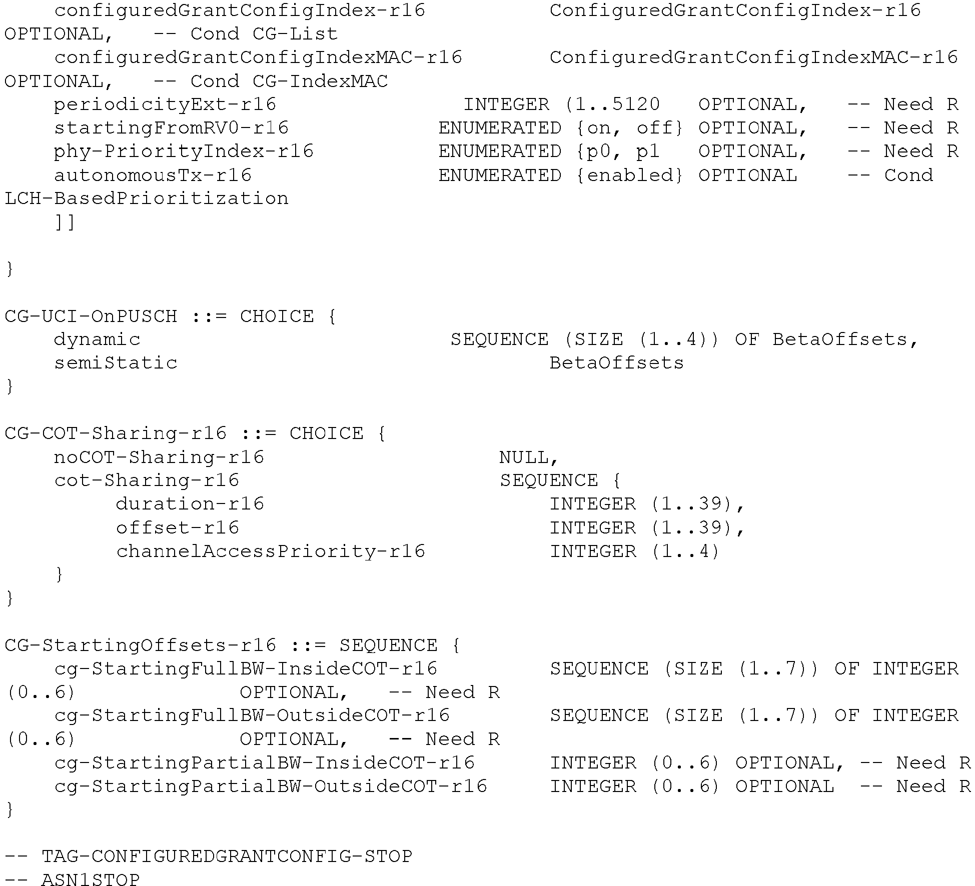

| ***ConfiguredGrantConfig* field descriptions** | |
|---|---|
| ***antennaPort*** | |
| Indicates the antenna port(s) to be used for this configuration, and the maximum bitwidth is 5. See TS 38.214 [19], clause 6.1.2, and TS 38.212 [17], clause 7.3.1. | |
| ***autonomousTx*** | |
| If this field is present, the Configured Grant configuration is configured with autonomous transmission, see TS 38.321 [3]. | |
| ***betaOffsetCG-UCI*** | |
| Beta offset for CG-UCI in CG-PUSCH, see TS 38.213 [13], clause 9.3 | |
| ***cg-COT-SharingList*** | |
| Indicates a table for COT sharing combinations (see 37.213 [48], clause 4.1.3). One row of the table can be set to noCOT-Sharing to indicate that there is no channel occupancy sharing. | |
| ***cg-COT-SharingOffset*** | |
| Indicates the offset from the end of the slot where the COT sharing indication in UCI is enabled where the offset in symbols is equal to 14*n, where n is the signaled value for *cg-COT-SharingOffset.* Applicable when *ul-toDL-COT-SharingED-Threshold-r16* is not configured (see 37.213 [48], clause 4.1.3). | |
| ***cg-DMRS-Configuration*** | |
| DMRS configuration (see TS 38.214 [19], clause 6.1.2.3). | |
| ***cg-minDFI-Delay*** | |
| Indicates the minimum duration (in unit of symbols) from the ending symbol of the PUSCH to the starting symbol of the PDCCH containing the downlink feedback indication (DFI) carrying HARQ-ACK for this PUSCH. The HARQ-ACK received before this minimum duration is not considered as valid for this PUSCH (see TS 38.213 [13], clause 10.5). The following minimum duration values are supported, depending on the configured subcarrier spacing [symbols]: | |
| 15 kHz: 7, m*14, where m = {1, 2, 3, 4} | |
| 30 kHz: 7, m*14, where m = {1, 2, 3, 4, 5, 6, 7, 8} | |
| 60 kHz: 7, m*14, where m = {1, 2, 3, 4, 5, 6, 7, 8, 9, 10, 11, 12, 13, 14, 15, 16} | |
| ***cg-nrofPUSCH-InSlot*** | |
| Indicates the number of consecutive PUSCH configured to CG within a slot where the SLIV indicating the first PUSCH and additional PUSCH appended with the same length (see TS 38.214 [19], clause 6.1.2.3). | |
| ***cg-nrofSlots*** | |
| Indicates the number of allocated slots in a configured grant periodicity following the time instance of configured grant offset (see TS 38.214 [19], clause 6.1.2.3). | |
| ***cg-RetransmissionTimer*** | |
| Indicates the initial value of the configured retransmission timer (see TS 38.321 [3]) in multiples of *periodicity.* The value of *cg-Retransmission Timer* is always less than or equal to the value of *configuredGrantTimer.* This field is always configured for operation with shared spectrum channel access together with *harq-ProcID-Offset.* This field is not configured for operation in licensed spectrum or simultaneously with *harq-ProcID-Offset*2*.* | |
| ***cg-UCI-Multiplexing*** | |
| If present, this field indicates that in the case of PUCCH overlapping with CG-PUSCH(s) within a PUCCH group, the CG-UCI and HARQ-ACK are jointly encoded (see TS 38.213 [13], clause 9). | |
| ***configuredGrantConfiglndex*** | |
| Indicates the index of the Configured Grant configurations within the BWP. | |
| ***configuredGrantConfigIndexMAC*** | |
| Indicates the index of the Configured Grant configurations within the MAC entity. | |
| ***configuredGrantTimer*** | |
| Indicates the initial value of the configured grant timer (see TS 38.321 [3]) in multiples of periodicity. When cg-*RetransmissonTimer* is configured, if HARQ processes are shared among different configured grants on the same BWP, *configuredGrantTimer* * *periodicity* is set to the same value for the configurations that share HARQ processes on this BWP. | |
| ***dmrs-SeqInitialization*** | |
| The network configures this field if *transformPrecoder* is disabled. Otherwise the field is absent. | |
| ***frequencyDomainAllocation*** | |
| Indicates the frequency domain resource allocation, see TS 38.214 [19], clause 6.1.2, and TS 38.212 [17], clause 7.3.1). | |
| ***frequencyHopping*** | |
| The value *intraSlot* enables 'Intra-slot frequency hopping' and the value *interSlot* enables 'Inter-slot frequency hopping'. If the field is absent, frequency hopping is not configured. The field *frequencyHopping* applies to configured grant for 'pusch-RepTypeA' (see TS 38.214 [19], clause 6.3.1). | |
| ***frequencyHoppingOffset*** | |
| Frequency hopping offset used when frequency hopping is enabled (see TS 38.214 [19], clause 6.1.2 and clause 6.3). | |
| ***frequencyHoppingPUSCH-RepTypeB*** | |
| Indicates the frequency hopping scheme for Type 1 CG when *pusch-RepTypelndicator* is set to 'pusch-RepTypeB' (see TS 38.214 [19], clause 6.1). The value *interRepetition* enables 'Inter-repetition frequency hopping', and the value *interSlot* enables 'Inter-slot frequency hopping'. If the field is absent, the frequency hopping is not enabled for Type 1 CG. | |
| ***harq-ProcID-Offset*** | |
| For operation with shared spectrum channel access, this configures the range of HARQ process IDs which can be used for this configured grant where the UE can select a HARQ process ID within *[harq-proclD-offset,* .., (*harq-procID-offset* + *nrofHARQ-Processes* - 1)]. | |
| ***harq-ProcID-Offset2*** | |
| Indicates the offset used in deriving the HARQ process IDs, see TS 38.321 [3], clause 5.4.1. This field is not configured for operation with shared spectrum channel access. | |
| ***mcs-Table*** | |
| Indicates the MCS table the UE shall use for PUSCH without transform precoding. If the field is absent the UE applies the value *qam64.* | |
| ***mcs-Table TransformPrecoder*** | |
| Indicates the MCS table the UE shall use for PUSCH with transform precoding. If the field is absent the UE applies the value *qam64.* | |
| ***mcsAndTBS*** | |
| The modulation order, target code rate and TB size (see TS 38.214 [19], clause 6.1.2). The NW does not configure the values 28-31 in this version of the specification. | |
| ***nrofHARQ-Processes*** | |
| The number of HARQ processes configured. It applies for both Type 1 and Type 2. See TS 38.321 [3], clause 5.4.1. | |
| ***p0-PUSCH-Alpha*** | |
| Index of the *PO-PUSCH-AlphaSet* to be used for th is configuration. | |
| ***periodicity*** | |
| Periodicity for UL transmission without UL grant for type 1 and type 2 (see TS 38.321 [3], clause 5.8.2). | |
| The following periodicities are supported depending on the configured subcarrier spacing [symbols]: | |
| 15 kHz: | 2, 7, n*14, where n={1, 2, 4, 5, 8, 10, 16, 20, 32, 40, 64, 80, 128, 160, 320, 640} |
| 30 kHz: | 2, 7, n*14, where n={1, 2, 4, 5, 8, 10, 16, 20, 32, 40, 64, 80, 128, 160, 256, 320, 640, 1280} |
| 60 kHz with normal CP | 2, 7, n*14, where n={1, 2, 4, 5, 8, 10, 16, 20, 32, 40, 64, 80, 128, 160, 256, 320, 512, 640, 1280, 2560} |
| 60 kHz with ECP: 1280, 2560} | 2, 6, n*12, where n={1, 2, 4, 5, 8, 10, 16, 20, 32, 40, 64, 80, 128, 160, 256, 320, 512, 640, |
| 120 kHz: | 2, 7, n*14, where n={1, 2, 4, 5, 8, 10, 16, 20, 32, 40, 64, 80, 128, 160, 256, 320, 512, 640, 1024, 1280, 2560, 5120} |
| ***periodicityExt*** | |
| This field is used to calculate the periodicity for UL transmission without UL grant for type 1 and type 2 (see TS 38.321 [3], clause 5,8.2). If this field is present, the field *periodicity* is ignored. | |
| The following periodicites are supported depending on the configured subcarrier spacing [symbols]: | |
| 15 kHz: | *periodicityExt**14, where *periodicityExt* has a value between 1 and 640. |
| 30 kHz: | *periodicityExt*^{*}14, where *periodicityExt* has a value between 1 and 1280. |
| 60 kHz with normal CP: | *periodicityExt*^{*}14, where *periodicityExt* has a value between 1 and 2560. |
| 60 kHz with ECP: | *periodicityExt*^{*}12*,* where *periodicityExt* has a value between 1 and 2560. |
| 120 kHz: | *periodicityExt*^{*}14, where *periodicityExt* has a value between 1 and 5120. |
| ***phy-Prioritylndex*** | |
| Indicates the PHY priority of CG PUSCH at least for PHY-layer collision handling. Value *p0* indicates low priority and value *p1* indicates high priority. | |
| ***powerControlLoopToUse*** | |
| Closed control loop to apply (see TS 38.213 [13], clause 7.1.1). | |
| ***pusch-RepTypelndicator*** | |
| Indicates whether UE follows the behavior for PUSCH repetition type A or the behavior for PUSCH repetition type B for each Type 1 configured grant configuration. The value *pusch-RepTypeA* enables the 'PUSCH repetition type A' and the value *pusch-RepTypeB* enables the 'PUSCH repetition type B' (see TS 38.214 [19], clause 6.1.2.3). | |
| ***rbg-Size*** | |
| Selection between configuration 1 and configuration 2 for RBG size for PUSCH. The UE does not apply this field if *resourceAllocation* is set to *resourceAllocationType1.* Otherwise, the UE applies the value *config1* when the field is absent. Note: *rbg-Size* is used when the *transformPrecoder* parameter is disabled. | |
| ***repK-RV*** | |
| The redundancy version (RV) sequence to use. See TS 38.214 [19], clause 6.1.2. The network configures this field if repetitions are used, i.e., if *repK* is set to *n2, n4* or *n8.* This field is not configured when *cg-RetransmissionTimer* is configured. Otherwise, the field is absent. | |
| ***repK*** | |
| Number of repetitions K, see TS 38.214 [19]. | |
| ***resourceAllocation*** | |
| Configuration of resource allocation type 0 and resource allocation type 1. For Type 1 UL data transmission without grant, *resourceAllocation* should be *resourceAllocationTypeO* or *resourceAllocationType1.* | |
| ***rrc-ConfiguredUplinkGrant*** | |
| Configuration for "configured grant" transmission with fully RRC-configured UL grant (Type1). If this field is absent the UE uses UL grant configured by DCI addressed to CS-RNTI (Type2). Type 1 configured grant may be configured for UL or SUL, but not for both simultaneously. | |
| ***srs-Resourcelndicator*** | |
| Indicates the SRS resource to be used. | |
| ***startingFromRV0*** | |
| This field is used to determine the initial transmission occasion of a transport block for a given RV sequence, see TS 38.214 [19], clause 6.1.2.3.1. | |
| ***timeDomainAllocation*** | |
| Indicates a combination of start symbol and length and PUSCH mapping type, see TS 38.214 [19], clause 6.1.2 and TS 38.212 [17], clause 7.3.1. | |
| ***timeDomainOffset*** | |
| Offset related to the reference SFN indicated by *timeReferenceSFN,* see TS 38.321 [3], clause 5.8.2. | |
| ***timeReferenceSFN*** | |
| Indicates SFN used for determination of the offset of a resource in time domain. The UE uses the closest SFN with the indicated number preceding the reception of the configured grant configuration, see TS 38.321 [3], clause 5.8.2. If the field *timeReferenceSFN* is not present, the reference SFN is 0. | |
| ***transformPrecoder*** | |
| Enables or disables transform precoding for *type1* and *type2.* If the field is absent, the UE enables or disables transform precoding in accordance with the field *msg3-transformPrecoder* in *RACH-ConfigCommon,* see TS 38.214 [19], clause 6.1.3. | |
| ***uci-OnPUSCH*** | |
| Selection between and configuration of dynamic and semi-static beta-offset. For Type 1 UL data transmission without grant, *uci-OnPUSCH* should be set to *semiStatic.* | |

| ***CG-COT-Sharing* field descriptions** |
|---|
| ***channelAccessPriority*** |
| Indicates the Channel Access Priority Class that the gNB can assume when sharing the UE initiated COT (see 37.213 [48], clause 4.1.3). |
| ***duration*** |
| Indicates the number of DL transmission slots within UE initiated COT (see 37.213 [48], clause 4.1.3). |
| ***offset*** |
| Indicates the number of DL transmission slots from the end of the slot where CG-UCI is detected after which COT sharing can be used (see 37.213 [48], clause 4.1.3). |

| ***CG-StartingOffsets* field descriptions** |
|---|
| ***cg-StartingFullBW-InsideCOT*** |
| A set of configured grant PUSCH transmission starting offsets which indicates the length of a CP extension of the first symbol that is located before the configured resource when frequency domain resource allocation includes all interlaces in the allocated RB set(s) and the CG PUSCH resource is inside gNB COT (see TS 38.214 [19], clause 6.1.2.3). |
| ***cg-StartingFullBW-OutsideCOT*** |
| A set of configured grant PUSCH transmission starting offset indices (see TS 38.211 [16], Table 5.3.1-2) which indicates the length of a CP extension of the first symbol that is located before the configured resource when frequency domain resource allocation includes all interlaces in the allocated RB set(s) and the CG PUSCH resource is outside gNB COT (see TS 38.214 [19], clause 6.1.2.3). |
| ***cg-StartingPartialBW-InsideCOT*** |
| A set of configured grant PUSCH transmission starting offset index (see TS 38.211 [16], Table 5.3.1-2) which indicates the length of a CP extension of the first symbol that is located before the configured resource when frequency domain resource allocation does not include all interlaces in the allocated RB set(s) and the CG PUSCH resource is inside gNB COT (see TS 38.214 [19], clause 6.1.2.3). |
| ***cg-StartingPartialBW-OutsideCOT*** |
| A set of configured grant PUSCH transmission starting offset index (see TS 38.211 [16], Table 5.3.1-2) which indicates the length of a CP extension of the first symbol that is located before the configured resource when frequency domain resource allocation does not include all interlaces in the allocated RB set(s) and the CG PUSCH resource is outside gNB COT (see TS 38.214 [19], clause 6.1.2.3). |

| **Conditional Presence** | **Explanation** |
|---|---|
| *L CH-BasedPrioritization* | This fiels is optionally present, Need R, if *Ich-BasedPrioritization* is configured in the MAC entity. It is absent otherwise. |
| *RepTypeB* | The field is optionally present if pusch-RepTypelndicator is set to pusch-RepTypeB, Need S, and absent otherwise. |
| *CG-List* | The field is mandatory present when included in *configuredGrantConfigToAddModList-r16,* otherwise the field is absent. |
| *CG-IndexMAC* | The field is mandatory present if at least one configured grant is configured by *configuredGrantConfigToAddModList-r16* in any BWP of this MAC entity, otherwise it is optionally present, need R. |

### ConfiguredGrantConfigIndex

The IE *ConfiguredGrantConfiglndex* is used to indicate the index of one of multiple UL Configured Grant configurations in one BWP.

### ConfiguredGrantConfiglndex information element

```
 -- ASN1START
 -- TAG-CONFIGUREDGRANTCONFIGINDEX-START
 ConfiguredGrantConfigIndex-r16 ::= INTEGER (0.. maxNrofConfiguredGrantConfig-
 r16-1)
 -- TAG-CONFIGUREDGRANTCONFIGINDEX-STOP
 -- ASN1STOP
```

To give an overview, both Type 1 and Type 2CG can be configured by RRC, e.g. per serving cell and/or per Bandwidth Part (BWP). Multiple configurations can be active simultaneously among the serving cells.

When the CG type 1 is used, e.g. one or more of the following parameters could be configured:
- a CS-RNTI for retransmission;
- a periodicity of the configured grant Type 1;
- the offset of a resource with respect to the SFN = 0 (System Frame Number) in time domain;
- time-domain parameters that include the start symbol and the length of the assignment;
- the number of HARQ processes

Alternatively, with the CG type 2, e.g. one or more of the following parameters could be configured:
- a CS-RNTI for activation, deactivation and retransmission;
- a periodicity of the configured grant Type 2;
- the number of HARQ processes;

When either Type 1 CG or Type 2 CG is configured, the UE can autonomously start the uplink data transmission according to the configured periodicity and radio resources. Configured grant transmission may support multiple UEs to access the same configured grant resources, which may reduce latency, and reduce signaling overhead.

A resource configuration for a CG may comprise physical resources in a time domain and/or frequency domain, and/or reference signal (RS) parameters. The configuration parameter may include a modulation and coding scheme (MCS) and/or a number of repetitions and/or a cycle period.

### Small-data transmissions

The characteristics of the small-data transmissions that are targeted in this disclosure refer to any service with the characteristics that data bursts in UL/DL are small and optionally rather infrequent with no strict requirements on delay. For instance, a single data transmission that it so small that it can be sent by the UE in one transmission (e.g. in RACH, see below) can be considered a small-data transmission. Typical non-limiting examples of traffic characteristics are captured in the following table (see TR 25.705 v13.0.0 section 5).

**Characteristics of the small-data transmissions**

| **Traffic parameter** | **Value** |
|---|---|
| application packet size | 100 bytes (UL); 100 bytes (DL) |
| latency¹ | 5s to 30min; 1 hour for no mobility (static, pedestrian) |
| frequency | every minute and up to monthly |
| NOTE 1: latency is the duration from when the packet arrives at the buffer until it is completely transmitted (delay tolerance of the application). | |

Another different possible exemplary definition can depend on the configuration of the gNB. For instance, the gNB can define that data below a certain threshold (e.g. 1000 kbyte) can be considered small data, whereas data above that threshold is not to be considered small data. This threshold could e.g. be defined in connection with the buffer status.

Alternatively, a definition of what small-data is could also be fixed by a suitable standard, e.g. providing a similar data amount threshold as described above.

### Small-data transmission by UE in RRC Inactive state

In more detail, 5G NR supports the RRC_INACTIVE state, and UEs with infrequent (periodic and/or non-periodic) data transmission are generally maintained by the network in the RRC_INACTIVE state. Until Rel-16, the RRC_INACTIVE state does not support data transmissions. Hence, the UE has to resume the connection (e.g. move to RRC_CONNECTED state) for any DL (MobileTerminated) and UL (MobileOriginated) data. Connection setup (or resume) and subsequently release to RRC_INACTIVE state would have to happen for each data transmission, however small and infrequent the data packets are. This results in unnecessary power consumption and signalling overhead.

Moreover, document 3GPP RP-193252 is 3GPP Work Item Description regarding NR Small Data, and provides the following specific examples of small and infrequent data traffic, in the sense of small data, include the following use cases:
- Smartphone applications:
   ∘ Traffic from Instant Messaging services (whatsapp, QQ, wechat etc.)
   ∘ Heart-beat/keep-alive traffic from IM/email clients and other apps
   ∘ Push notifications from various applications
- Non-smartphone applications:
   ∘ Traffic from wearables (periodic positioning information etc.)
   ∘ sensors (Industrial Wireless Sensor Networks transmitting temperature, pressure readings periodically or in an event triggered manner etc.)
   ∘ smart meters and smart meter networks sending periodic meter readings

Small-data transmissions can support various different packet sizes and can have different traffic requirements.

For example, for a Heart-beat traffic/keep alive traffic the packet size is around 50 bytes - 100 bytes. Furthermore, a heart-beat message arrives every 5 minute or in the order to seconds. For smart meter sending periodic meter reading, the packet size is around 12 -100 bytes for regular transmission. For sensor sending periodic traffic or event trigger traffic (aperiodic traffic), the packet size is around 8 bytes-128 bytes. The instant message (traffic pattern is not deterministic) can deliver text, photo, video etc., and the packet size varies from 100 bytes to 1000 bytes. For push notification, traffic pattern is not deterministic and different applications generate very diverse message sizes.

An exemplary procedure of the prior art (in this case a 5G-NR-compliant prior art solution) to enable a UE in the RRC Inactive state, after transition to the RRC Connected state, to transmit (small) data will be briefly explained in the following with reference to Fig. 9. As apparent from the figure, the UE is assumed to be in RRC_Inactive state, which may e.g. involve that the UE (and gNB) has all data radio bearers suspended, and that no data can be transmitted to the gNB. In order to enable the UE to transmit data, the UE has to be first transitioned into the RRC Connected state, which can be done e.g. by the UE requesting to resume the RRC connection (here transmitting *RRCResumeRequest)* as part of the RACH procedure (in Fig. 9, e.g. using the 4-step RACH procedure).

In detail, the UE may transmit the preamble to the current gNB, then receives a corresponding random access response with a (small) UL grant of radio resources, which are used by the UE to transmit the RRCResumeRequest message as msg3 of the RACH procedure.

Finally, the new gNB provides the RRCResume message to the UE, which in turn then transitions to the RRC Connected state, including the resumption of all data radio bearers. In RRC_Connected state, the UE is then able to transmit the UL data.

It is not yet defined how and when the gNB decides that a UE should indeed by transitioned to RRC_CONNECTED state. The control in said respect is likely to still rest with the gNB, although the UE might request to resume the RRC connection. One exemplary possibility is that the gNB takes into account the buffer status report, that the UE could transmit e.g. in the Msg3 or MsgA, to decide whether the UE should transition to the RRC_CONNECTED state or not. The buffer status report indicates the actual amount of data in the UE buffer. For instance, if the buffer status report indicates a large amount of data in the UE buffer, the gNB might decide to transition the UE from RRC_INACTIVE to RRC_CONNECTED state (e.g. by gNB sending *RRCResume* message). On the other hand, if the buffer status report indicates only little amount of data in the UE buffer, the gNB might decide to keep the UE in the RRC_INACTIVE state (e.g. by gNB sending *RRCRelease* message). Furthermore, also the absence of the buffer status report in the Msg3/MsgA may provide an indication to the gNB, e.g. that no further data is available in the UE buffer, concluding that the UE can stay in RRC_INACTIVE.

As can be appreciated from the description of Fig. 9, the above process, according to which the UE first needs to transition from the inactive state to the connected state such that the UE can send any user data in the uplink, introduces latency and consumes significant UE power for each transmission of user data. Moreover, the signalling overhead caused for INACTIVE-state UEs when transmitting small data packets is a general problem and will even be exacerbated with more UEs being handled simultaneously in 5G NR.

Therefore, 3GPP is intending to enable the RRC_Inactive UE to transmit small data in the uplink without changing the UE state to RRC Connected. In general, any device that has intermittent small data packets, when in the INACTIVE state, will benefit from enabling small data transmissions in the INACTIVE state.

It was agreed in 3GPP to enable small data transmissions (SDT) by using 4-step RACH, 2-step RACH (see above e.g. Fig. 6, 7), or a configured-grant (CG) procedure (see above section *"Configured grant, grant free access, grant free uplink").* The present application revolves mainly around the CG-based SDT procedure, however also covers the RACH-based SDT procedure, be it based on the 4-step RACH or 2-step RACH.

Depending on the application types in the UE, the UEs can have different traffic requirements and correspondingly different packet sizes. The gNB can determine the resources to be allocated to the UE based on the configured grant (e.g. Type 1). The gNB can perform the determination e.g. based on one or more of subscription information, a traffic pattern and other type of UE assistance information.

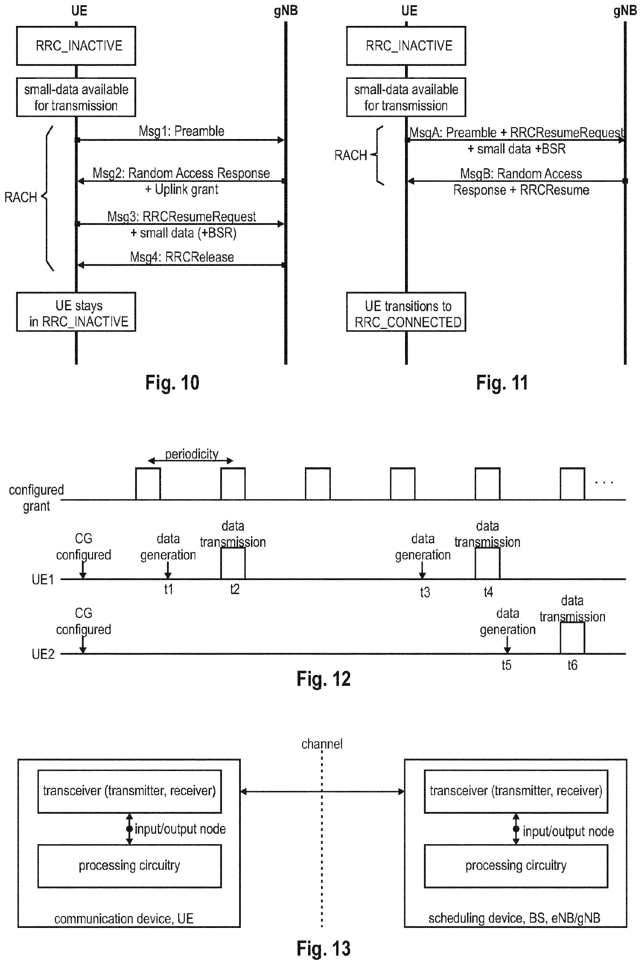

One possibility for a UE to transmit small data in the uplink when still in RRC_INACTIVE state is to use the RACH procedure, as mentioned above. The following assumptions, made for Fig. 10 and 11 and also for subsequently describing some concepts, solutions and variants of the invention, are to be considered only as exemplary.

When assuming a RACH-based small-data uplink transmission as an example, the UE can use either the 2-step RACH or 4-step RACH to send small data in the uplink (see MsgA or Msg3), and simplified and exemplary RACH-based small-data uplink transmission procedures are illustrated in Fig. 10 and 11. In both Fig. 10 and 11 it is exemplarily assumed that the UE is already in RRC_INACTIVE state and has small-data available for transmission. **Fig. 10** assumes a 4-step RACH procedure and illustrates how the UE transmits the small data with the Msg3. **Fig. 11** assumes a 2-step RACH procedure and illustrates how the UE transmits the small data with the MsgA.

According to one example, the control message and the small data are transmitted together to the base station, e.g. together in the same transport block, where the UE builds the transport block using the resources and multiplexes data and signaling together in the same transport block of the MAC layer. For the 4-step RACH case, the small data is transmitted in the Msg3, based e.g. on the radio resources granted through the uplink grant received from the gNB in the Msg2. For the 2-step RACH case, the small data is transmitted in the MsgA, e.g. using radio resources that are selected by the UE from some previously-configured radio resources, e.g. in connection with the selected RACH preamble.

Moreover, Fig. 10 and 11 illustrate that the buffer status report can be included in the Msg3 respectively MsgA, although the BSR is only illustrated within parentheses to reflect that including the BSR is merely an exemplary possibility. For instance, in Fig. 10 it is exemplarily assumed that the gNB decides to keep the UE in RRC_Inactive state, e.g. because the BSR is either absent or indicates only little uplink small data in the UE buffer. Correspondingly, an RRCRelease message is transmitted for the Msg4. On the other hand, in Fig. 11 it is exemplarily assumed that the gNB decides to transition the UE to the RRC_Connected state, e.g. because the BSR indicates a significant amount of uplink data in the UE buffer that has to be transmitted by the UE. Correspondingly, an RRCResume message is transmitted for the MsgA. Moreover, although in Fig. 10 the uplink grant is illustrated separately from the Random Access Response of Msg2, in Fig. 10, the uplink grant may equally be considered as belonging to and being part of the Random Access Response.

In summary, a possible exemplary implementation of a small-data uplink transmission for RRC_INACTIVE UEs is possible and could be e.g. based on the RACH procedure, be it a 2-step or 4-step RACH procedure (see Fig. 10 and 11).

**Fig. 12** illustrates in an exemplary manner a configured grant for two UEs, UE1 and UE2, both in the inactive state. The periodic CG-allocated radio resources are illustrated in the top row of Fig. 12, and have a specific periodicity. For instance, a heart-beat message may become available for transmission at the UE1 every 5 minutes, while the traffic generation for a sensor has a traffic periodicity of every 1hr.

The same CG-resources are shared between UE1 and UE2 and are thus available for an uplink transmission at the UE1 and UE2. It is assumed that at time t1, data becomes available for transmission at the UE1. The next usable CG-resource is at time t2, which the UE1 uses for performing the small-data transmission. Similarly, UE1 can use the radio resources allocated by the configured grant at t4 to transmit the data generated at t3. It is exemplary assumed that at UE2 small data becomes available for transmission at time instance t5, and that UE2 uses the next-available CG at t6 to transmit the small data.

No final agreements have been reached in 3GPP for a standardized method on how the transmission of (small) data can be enabled for a UE that stays in the RRC Inactive state. However, a provisional agreement has been reached in that a data volume threshold is to be used for the UE to decide whether to perform a small-data transmission or not while in the Inactive state. For instance, the UE can determine to trigger a small-data transmission in the Inactive state, when the available data volume is not larger than the configured data volume threshold. On the other hand, if the total amount of small data is above the data volume threshold, the UE switches to RRC_Connected state to perform the SDT.

### Further Improvements

Although the above agreement for using a data volume threshold was made in 3GPP, details on how same is to be used and implemented are still missing.

It is for instance unclear whether said data volume threshold is to be commonly used for the Random-Access-based small-data transmission (RA-based SDT) and the configured-grant-based small-data transmission (CG-based SDT). The inventors have realized that, if one data volume threshold is to be commonly used, the definition of the particular value of the data volume threshold is not tailored to the properties of the RA-based SDT or CG-based SDT.

For instance, if the data volume threshold is set lower than the allocated CG-based radio resources, a UE, although having sufficient and valid CG-based radio resources to transmit a particular amount of small data, would still have to go to RRC-Connected, because the available small-data amount is larger than the data volume threshold. As a result, power consumption as well as signaling overhead could increase.

Furthermore, it is unclear whether the data volume threshold is to be common to all UEs. The inventors have for instance realized that configuring a data volume threshold common for all UEs is difficult for the gNB, because the UEs have different traffic requirements and services, such that one common data volume threshold would likely not be suitable for all UEs and a suitable value is difficult to find. The power consumption and signaling overhead would not be optimal for different UEs. This applies to the RA-based SDT as well as to the CG-based SDT (e.g. the CG resources might be defined by the gNB based on the UE's traffic requirements and characteristics).

The inventors have identified the above-discussed potential drawbacks and challenges and have thus identified the possibility of providing an improved small-data transmission procedure that allows avoiding or mitigating one or more of the above-identified problems. The present invention relates to different solutions and variants for such an improved small-data transmission procedure.

### Embodiments

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, **a mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

The term **"small data"** used in the application is to be broadly understood as data that the UE and the base station agree on being small, e.g. versus non-small. For instance, whether data is to be considered small-data or not, can e.g. be defined by a base station by setting a data amount threshold. Alternatively, what constitutes small-data can be defined by a telecom standard, e.g. by setting a data amount threshold. As examples, possible definitions of what is small data can be found above in the corresponding small-data section.

The term **"inactive state"** used in the application is to be broadly understood as a state in which regular and extensive data exchange between the UE and the base station is not possible or not common. For instance, the UE, when in inactive state, (e.g. called "inactive UE") may not have actively-used data connections, but still has one or more inactive data connections (e.g. could also be called existent but not currently-used) that allow a (small) data transmission without the need to resume the data connection first. For sake of completion, the UE in **the idle state** does not have data connections over which the UE could transmit data to the base station, while the UE in **connected state** has one or more active data connections that can be immediately used to carry data to the base station.

The term **"data volume threshold"** used in the application is to be broadly understood as referring to an upper threshold (could also be termed "limit") for a volume of data (i.e. amount of data), in this case e.g. of small data. The data volume threshold is comparable to a corresponding amount or volume of data, and serves as a parameter for further determinations in the UE and/or base station.

The term **"periodic radio resources"** used in the application is to be broadly understood as referring to radio resources (e.g. in the time and/or frequency domain) that occur periodically in time. These "periodic radio resources" can be allocated to a UE (or more UEs) in advance by the corresponding serving base station (serving the UE) and are thus already configured and usable by the UE to transmit data, without the need that the UE first has to request radio resources when (small) data becomes available for transmission. In one example, the "periodic radio resources" are those of a configured grant, as described above for the 5G implementation, e.g. a configured grant of type 1.

The application distinguishes between a periodic-resource-based small-data transmission (e.g. the above-introduced CG-based SDT) and a random-access-based small-data transmission (e.g. the above-introduced RA-based SDT).

For the following solutions it is exemplarily assumed that the improved small-data transmission procedure is conceptually based on the small-data transmissions already defined according to 3GPP 4G or 5G standards.

**Fig. 13** illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of an improved small-data transmission procedure will be described in the following. In said connection, improved UEs and improved base stations are presented, which participate in the improved small-data-transmission procedure. Corresponding methods for the UE behavior and the base station behavior are provided as well.

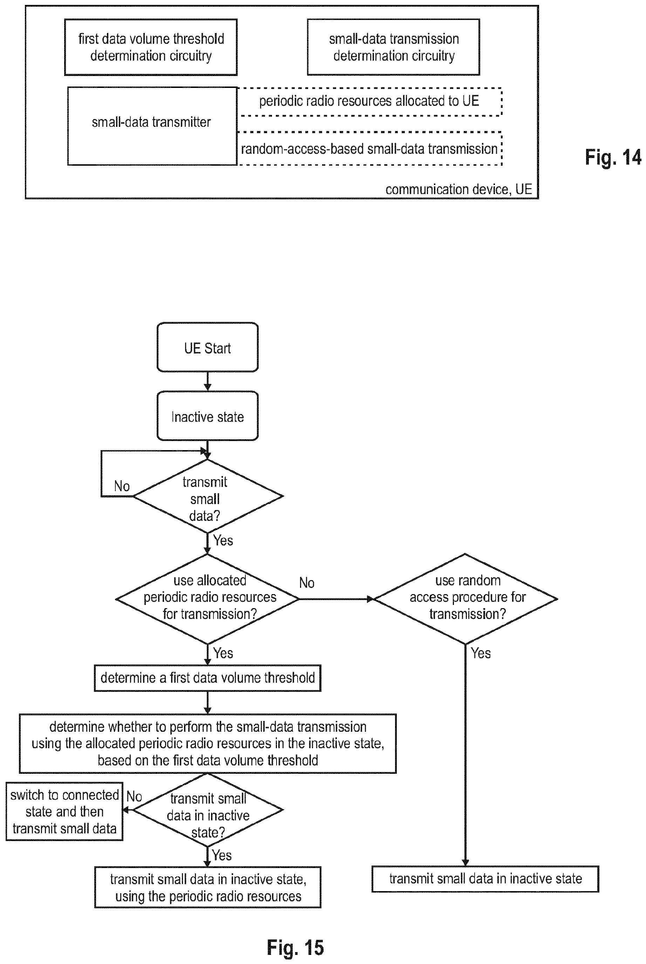

**Fig. 14** illustrates a simplified and exemplary UE structure according to an exemplary implementation of the improved small-data transmission procedure, and which can be implemented based on the general UE structure explained in connection with Fig. 13. The various structural elements of the UE illustrated in said Fig. 14 can be interconnected between one another e.g. with corresponding input/output nodes (not shown) e.g. in order to exchange control and user data and other signals. Although not shown for illustration purposes, the UE may include further structural elements.

As apparent from Fig. 14, the UE may include a first data volume threshold determination circuitry, a small-data transmission determination circuitry, and a small-data transmitter, wherein the small-data transmitter can use e.g. periodic radio resources allocated to the UE or a random-access-procedure for transmitting the data.

In the present case as will become apparent from the below disclosure, the receiver of the UE can thus be exemplarily configured to at least partly perform one or more of receiving a data volume threshold index, receiving information on an association between data volume threshold indexes and data volume thresholds, receiving information on another association between different data volume thresholds and different values of a configuration parameter of the allocated periodic radio resources, etc.

In the present case as will become apparent from the below disclosure, the processing circuitry of the UE can thus be exemplarily configured to at least partly perform one or more of determining a first data volume threshold, determining to transmit small data that became available for transmission, determining whether to perform the transmission of the available small data in the inactive state using the periodic radio resources using the previously determined first data volume threshold , determining the value of a configuration parameter of the periodic resources, etc.

In the present case as will become apparent from the below disclosure, the transmitter of the UE can thus be exemplarily configured to at least partly perform one or more of transmitting the small data, using the periodic resources or as part of a random access procedure, or when in the connected state, etc.

One exemplary procedure as will be disclosed in more detail further below is implemented by a UE that includes the following. A processor of the UE determines a first data volume threshold. The processor determines to transmit small data, that became available for transmission, in an inactive state or in a connected state, based on a volume of the available small data and the first data volume threshold. The UE is in the inactive state out of the connected state, an idle state and the inactive state. A transmitter of the UE performs transmission of the available small data. The first data volume threshold is to be used for determining whether to perform the transmission of available small data in the inactive state using periodic radio resources that are usable for transmission of small data without a prior scheduling request from the UE, the periodic radio resources being allocated in advance by a serving base station. On the other hand, the first data volume threshold is not to be used for determining whether to perform a random-access-based transmission of available small data in the inactive state.

A corresponding sequence diagram for an exemplary UE behavior in line with the above-discussed UE is illustrated in **Fig. 15****.** A corresponding method comprises the following steps performed by a UE:
determining a first data volume threshold,
determining to transmit small data, that became available for transmission, in an inactive state or in a connected state, based on a volume of the available small data and the first data volume threshold, wherein the UE is in the inactive state out of the connected state, an idle state and the inactive state,
performing transmission of the available small data, and
wherein the first data volume threshold is to be used for determining whether to perform the transmission of available small data in the inactive state using periodic radio resources that are usable for transmission of small data without a prior scheduling request from the UE, the periodic radio resources being allocated in advance by a serving base station,
wherein the first data volume threshold is not to be used for determining whether to perform a random-access-based transmission of available small data in the inactive state.

The exemplary implementation of the UE behaviour according to Fig. 15 includes determination steps for differentiating whether the small-data transmission is to be transmitted using the periodic radio resources allocated in advance by the serving base station serving the UE. As presented above, the first data volume threshold is specifically configured for this periodic-resource-based transmission of small data and is not applicable to the random-access-based transmission of small data. In Fig. 15 this has been exemplarily illustrated in that the first data volume threshold is used in the branch for the periodic-resource-based small-data transmission but not in the branch for the random-access-based small-data transmission. The UE-behaviour of Fig. 15 is greatly simplified to reflect this concept of the improved small-data procedure, and the operation of the UE, particularly for the random-access-based small-data transmission, should not be considered as limiting but rather shall be considered as not being the focus of this broad implementation of the improved small-data transmission procedure. Rather, further variations of the improved small-data transmission procedure define the UE behaviour with regard to the random-access-based small-data transmission.

The improved small data transmission procedure also involves the base station, to which the UE is currently connected (termed e.g. serving base station). Correspondingly, the improved small data transmission procedure also provides the base station that participates therein. The base station could include the following. A processor of the base station allocates periodic radio resources to one or more user equipments, UEs. The allocated periodic radio resources are usable by any one of the one or more UEs, for transmission of small data without a prior scheduling request. The processor determines a plurality of data volume thresholds to be used by the UEs for determining whether to perform the transmission of small data in the inactive state using the allocated periodic radio resources. The plurality of data volume thresholds are not to be used by the UEs for determining whether to perform a random-access-based transmission of small data in the inactive state. A transmitter of the base station transmits information on the determined plurality of data volume thresholds to the UEs.

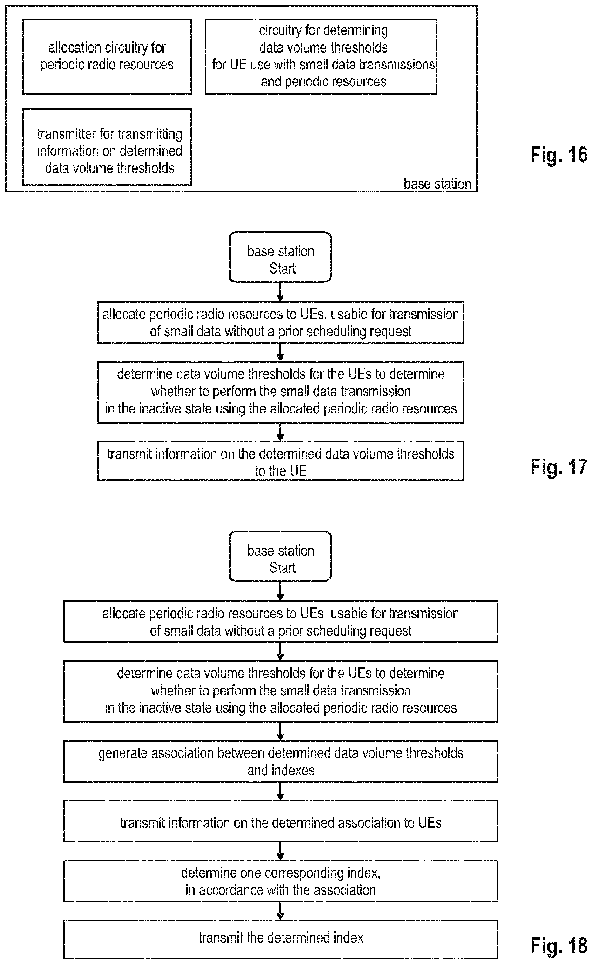

**Fig. 16** illustrates a simplified and exemplary base station structure according to an exemplary implementation of the improved small-data transmission procedure, and which can be implemented based on the general base station structure explained in connection with Fig. 13. The various structural elements of the base station illustrated in said Fig. 16 can be interconnected between one another e.g. with corresponding input/output nodes (not shown) e.g. in order to exchange control and user data and other signals. Although not shown for illustration purposes, the base station may include further structural elements.

As apparent therefrom, the base station comprises circuitry for allocation of periodic radio resources, circuitry for determining data volume thresholds for the UE to use with small data transmissions and periodic radio resources, and a transmitter for transmitting information on the determined data volume thresholds to the UE.

A corresponding sequence diagram for an exemplary base station behavior in line with the above-discussed base station is illustrated in **Fig. 17****.** A corresponding method comprises the following steps performed by the base station:
allocating periodic radio resources to one or more user equipments, UEs, the allocated periodic radio resources being usable by any one of the one or more UEs, for transmission of small data without a prior scheduling request,
determining a plurality of data volume thresholds to be used by the UEs for determining whether to perform the transmission of small data in the inactive state using the allocated periodic radio resources, wherein the plurality of data volume thresholds are not to be used by the UEs for determining whether to perform a random-access-based transmission of small data in the inactive state,
transmitting information on the determined plurality of data volume thresholds to the UEs.

As apparent from the above explanations regarding the improved small-data procedure for the UE and base station, and the corresponding UE and base station methods, a data volume threshold is specific to the periodic-resource-based small-data transmission, e.g. it is defined and to be used for the periodic-resource-based SDT and is not be used for the random-access-based SDT. Consequently, compared to a different common data volume threshold (common between the periodic-resource-based and the random-access-based SDT), it is possible to define the threshold (e.g. by the base station) to be appropriate for the periodic resources. The determination at the UE side as to when to switch to the connected state to transmit the small data, rather than to stay in the inactive state, can be more precise and tailored for the allocated periodic resources.

For instance, scenarios could be avoided where the UEs needs to switch to the connected state, although sufficient periodic resources for the small-data transmission are available. To said end, the data volume thresholds could be e.g. adapted individually based on the allocated periodic resources such that the lowest data volume threshold is still larger than the size of the configured periodic resources.

In the following, different variations and implementations of the above presented improved small-data transmission procedure will be presented, including corresponding UE structures, UE behavior, base station structures, and base station behavior.

For the various solutions, it is assumed that the UE is currently in the inactive state, and data (or small data) becomes available for transmission. The data could be transmitted in the uplink to the base station (mostly assumed as an example in the following), but could instead be transmitted over a sidelink interface (e.g. PC5) to another UE.

As an overview, a first solution will be presented, according to which the base station transmits an index of a data volume threshold to the UEs, and the UEs respectively have a UE-specific association that allows the UEs to derive the corresponding data volume threshold according to the received index.

A second solution will be presented, according to which the UEs autonomously determine the suitable data volume threshold, based on an association (e.g. in the form of a mapping table) already stored in the UE and the corresponding configuration parameter of the periodic radio resources that were allocated in advance to the UE to be used for transmitting the small data.

A further third solution will be presented, according to which the UE does not use a data volume threshold to determine whether to transmit small data in the inactive state using previously-allocated periodic radio resources. Instead, the UE may always first start transmitting the small data in the inactive state using these periodic resources, but additionally provides the base station with assistance information, which assists the base station to decide on whether the UE shall be allowed to stay in the inactive state or whether the UE shall be transitioned to the connected state.

Finally, a fourth solution is presented, according to which the base station may enable or disable particular periodic resources that the UE(s) can use for the transmission of small data, while the UE is in the inactive state in a simple and dynamic manner. This solution relies on the base station transmitting a corresponding index e.g. in system information, from which each UE then can derive on its own whether its preconfigured periodic resources are enabled or disabled.

For the following four solutions, it is assumed that the base station allocates to the UE(s) in advance periodic radio resources (see e.g. configured grant), for instance while the UE is still in the connected state. One exemplary possibility is to reuse the 5G solutions described above so as to provide periodic radio resources to the UE, usable for transmitting small data when in the inactive state; for instance, the above-described definitions of the RRC information elements *ConfiguredGrantConfig* and *ConfiguredGrantConfiglndex,* extracted from the cited TS 38.331 v16.3.1, could be used by the base station.

Correspondingly, the UE is thus enabled to transmit small data that becomes available for transmission using these periodic radio resources of the configured grant when being in the inactive state.

In addition, or alternatively, the UEs could be configured to use a random access procedure for transmitting small data.

### First solution - UE-specific data volume threshold using an index

In brief, the first solution of an improved small-data transmission procedure is based on that the base station transmits an index of a data volume threshold to the UEs, and the UEs respectively have a UE-specific association stored that allows the UEs to derive the corresponding data volume threshold according to the received index. This data volume threshold can then be used by the UE to determine whether it shall transmit the available small data in the inactive state. Otherwise, it might become necessary to first transition to the connected state, in order to transmit the small data.

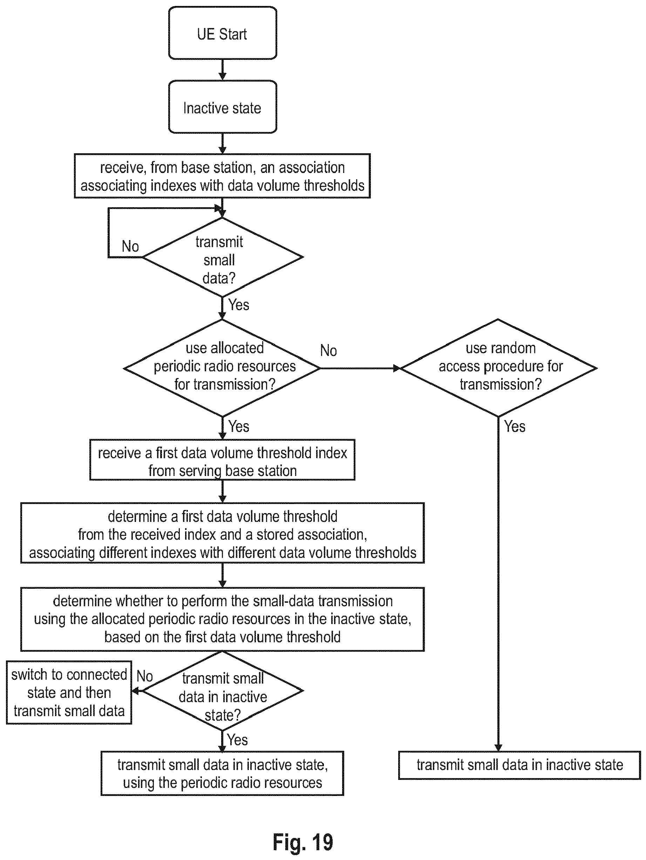

An exemplary base station behavior for this first solution is illustrated in Fig. 18.A corresponding exemplary UE behavior for this first solution is illustrated in Fig. 19.

For the discussion of this first solution, some assumptions are made in the following. It is exemplarily assumed that the base station is responsible for configuring the UEs appropriately for how the small-data transmissions are to be performed by the UE when the UE is in the inactive state.

Moreover, as apparent from **Fig. 18****,** the base station is responsible for configuring the UE(s) in advance (particularly with regard to the possible data volume thresholds) and then for dynamically controlling the UE(s) on which particular data volume threshold is to be used.

In brief, this involves for instance that the base station
- first determines the data volume thresholds,
- transmits suitable information on the determined data volume thresholds to the UEs, possibly as an association between indexes and the data volume thresholds,
- dynamically determines a suitable data volume threshold or a suitable index that would be suitable at the present time,
- transmits the determined index to the UE(s).

In turn, the UEs receive the index and can determine the corresponding data volume threshold, based on the received index and the previously received information on the association between possible indexes and the data volume thresholds. A corresponding exemplary UE behavior for this first solution is illustrated in **Fig. 19****.**

In brief, compared to the previously described UE behavior of Fig. 15, this more specifically involves that the UE determines the first data volume threshold, by:
- receiving information on an association between different data volume threshold indexes and corresponding data volume thresholds,
- receiving the data volume threshold index from the serving base station, and then
- determining the first data volume threshold, by finding that threshold in the association that corresponds to the received index.

More details and variations of the above-summarized base station behavior and UE behavior will be explained in the following.

The UE will use the data volume threshold to determine whether it shall transmit the small data in the inactive state (using the periodic resources) or whether it should transmit the small data in the connected state. In case the UE determines that the available small data is less than the data volume threshold, the UE determines that it can stay in the inactive state to transmit the small data. The UE proceeds to transmit the small data using the periodic radio resources. Otherwise, the available small data is larger than the data volume threshold, the UE determines that it cannot transmit the small data in the inactive state, and that it rather needs to transition to the connected state. The UE correspondingly proceeds to transition to the connected state; although not illustrated in Fig. 19 and not explained in detail in the following, the UE transition to the connected state may e.g. involve the exchange of suitable messages between the UE and the base station first. Eventually, the UE, in the connected state, transmits the small data, e.g. using dynamically allocated radio resources.

The first solution relies on an association between a plurality of data volume threshold indexes and a plurality of data volume thresholds. This association can be e.g. in the form of a mapping table, with one-to-one entries between one index and its corresponding data volume threshold. Thereby, the base station configures several different data volume thresholds that can be used by the UEs to determine whether to perform the small-data transmission in the inactive state using the allocated periodic radio resources.

This association between the indexes and the corresponding data volume thresholds could be made common among the different UEs in the cell of the base station. In such a case, the same association is used by the different UEs.

On the other hand, instead of using a UE-common mapping table, the base station could determine UE-specific associations, e.g. for each of one or a group of UEs, the base station prepares such a mapping table with corresponding entries for the different data volume thresholds. This would have the benefit that the base station can take UE-specific circumstances into account when determining the values of the data volume thresholds. For instance, the base station could take into account one or more of:
- a traffic pattern in the time-domain of that UE,
- a priority of that UE,
- a typical packet size received from that UE.

For example, a traffic pattern of the UE could be for instance that a UE1 transmits traffic every 5 min while a UE2 transmits data every 1 hour. The base station correspondingly could configure periodic resources having a periodicity of 5min to UE1, and could configure periodic resources to having a periodicity of 1 hour to UE2. In one example, the base station could configure larger data thresholds for UE1 having the shorter periodicity.

For example, a priority of the UE could distinguish between high-priority UEs, middle-priority UEs, and low-priority UEs. Conceptually, the base station could determine higher data volume threshold values for a high-priority UE compared to a middle-priority UE or low-priority UE, to thereby allow the high-priority UEs to transmit more data in the inactive state and thus save power. Following a different goal, the base station could determine lower data volume thresholds values for a high-priority UE, compared to a middle-priority UE or low-priority UE, thereby ensuring that the high-priority UEs transit to the connected state earlier and have a more robust small-data transmission.

Moreover for example, a typical packet size of small-data packets typically transmitted by a UE could be another parameter taken into account by the base station to determine the data volume thresholds. For instance, larger typical packet sizes could result in that the base station determines higher data volume thresholds so as to ensure that the UE keeps the possibility to transmit the small data in the inactive state. Or, the base station could take the typical packet size only into account so far as to ensure that the smallest data volume threshold of the UE-specific association is larger than the typical packet size.

By consistently taking specific UE-specific characteristics into account, the base station can determine UE-specific associations that are similar for similar UE characteristic, such as the traffic pattern, the UE priority, or the typical packet size. As a result, when the base station then broadcasts the corresponding data volume threshold index, similar UEs will use the same or similar data volume threshold, thereby facilitating a well-defined and consistent UE behavior throughout the cell of the base station.

From the UE perspective, the UE simply receives the mapping table generated by the serving base station, including the association between the different indexes and the corresponding data volume thresholds.

Exemplary mapping tables at UE1 and UE2 and the serving base station are presented in the following.

| **UE1** | **Data volume threshold** | **Index** |
|---|---|---|
| | 100 bytes | 1 |
| | 200 bytes | 2 |
| | 400 bytes | 3 |
| | 800 bytes | 4 |

| **UE2** | **Data volume threshold** | **Index** |
|---|---|---|
| | 400 bytes | 1 |
| | 500 bytes | 2 |
| | 600 bytes | 3 |
| | 800 bytes | 4 |

As apparent from the above mapping tables, when the base station broadcasts the same index (e.g. index 3), and UE1 and UE2 would may possibly use different data volume thresholds.

Moreover, in addition or alternatively to the above, the determination of the association between the indexes and different data volume thresholds could be common to all logical channels or specific to one or a group of logical channels.

In particular, when assuming that the association is common to all logical channels, the base station, when determining the data volume thresholds, does not distinguish between different logical channels. Logical channels could be e.g. associated with different services in the UE that generate small data, where the logical channel (and services) have particular characteristics (such as a priority, different QoS, etc.).

At the UE side, the UE would not differentiate to which logical channel the small data is assigned, when determining the suitable data volume thresholds, Rather, there would be one association for all logical channels from which the UE then selects; put differently, the association is common to all logical channels. Consequently, the UE compares the available small data to the data volume threshold, irrespectively from the one or more logical channels to which the small data is assigned.

On the other hand, instead of having a common association for all logical channels, the base station could prepare one association per one logical channel or per group of logical channels (but not for all logical channels).

In turn, the UE would also take into account the logical channel to which the small data is assigned when determining the data volume thresholds. In particular, the UE determines the logical channel to which the small data is assigned and then determines the data volume threshold from that logical-channel-specific association that corresponds to the previously-determined logical channel by using the previously received index.

For instance, a group of logical channels for which an association is prepared at the base station side could comprise logical channels with a same or similar characteristic, such as a priority, QoS.

Differentiating the mapping tables between logical channels could be beneficial in that the base station could configure data volume thresholds that are suitable for that logical channel (or group of logical channels). Furthermore, the configuration by the base station is simpler, because the base station does not need to determine a consolidated (common) mapping table taking into account all the possible logical channels; it may be easier to design the corresponding base station algorithm.

For example, logical channels could have different priorities (e.g. in terms of low-latency requirements), such that one logical channel #1 would reflect a high priority (e.g. a strict low-latency requirement) and another logical channel #2 would reflect a low priority (e.g. relaxed latency requirements). In such a case, high-priority logical channel #1 could be configured with comparatively larger data volume thresholds than low-priority logical channel #2, so as to ensure that small data for logical channel #1 is less likely to suffer from additional delays incurred if the UE has to first transition to the connected state.

Or, larger data volumes can only be transmitted by UEs that have a higher priority or for services (and logical channels) with a higher priority.

Another example could be that logical channels could have different traffic pattern. As an example, logical channel 1 has traffic every 5 min, while logical channel has traffic every 1hour. In said case, the longer the periodicity of the traffic pattern, the smaller the data volume threshold could be configured.

Exemplary logical-channel-specific mapping tables at the UE1 and base station are presented in the following. It is exemplary assumed that a UE1 is only configured with two different logical channels.

| | | |
|---|---|---|
| **UE1 &** Logical channel 1 | **Data volume threshold** | **Index** |
| | 100 bytes | 1 |
| | 200 bytes | 2 |
| | 400 bytes | 3 |
| | 500 bytes | 4 |

| | | |
|---|---|---|
| **UE1 &** Logical channel 2 | **Data volume threshold** | **Index** |
| | 500 bytes | 1 |
| | 600 bytes | 2 |
| | 700 bytes | 3 |
| | 800 bytes | 4 |

Correspondingly, the UE would determine whether the small-data that just became available for transmission belongs to logical channel 1 or logical channel 2. Assuming that the index with value 1 is instructed by the base station, the UE would thus determine a data volume threshold of 100 bytes in case the small data is for logical channel 1 and would thus determine a data volume threshold of 500 bytes in case the small data is for logical channel 2.

One exemplary variant takes into account that small data can become available from more than one logical channel. In the case, the UE may separately determine for each logical channel, whether the amount of data for that logical channel is larger than the logical-channel-specific data volume threshold. In one example, in case for one of the logical channels the data volume threshold is surpassed, the UE may determine that it cannot transmit the small data in the inactive state, but needs instead to transition to the connected state.

As described above, the base station transmits the UE-specific association between the indexes and the corresponding data volume thresholds to the UEs for later use. This base station transmission could be performed in different ways, e.g. using a message of the RRC protocol, e.g. when the UE is still in RRC Connected state.

An exemplary 3GPP-compliant implementation could be including the following information element in the RRCRelease message.

### RRCRelease message

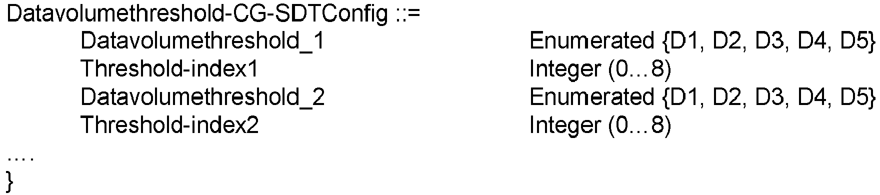

Correspondingly, the UE may receive the UE-specific association in a message of the RRC Protocol, e.g. the above-mentioned RRCRelease message.

In the above, the first solution was explained as including the step at the base station side of determining which data volume thresholds the UEs are to use and also which index should be broadcast in the cell in said respect. The determination of which index to transmit by the base station can be done in different ways and be based on one or more considerations.

For instance, the base station can take its own load situation into account when determining the one index to be broadcast in the cell. According to one exemplary implementation, the load situation at the base station could be based on one or more of:
- the amount of radio resources that are available for scheduling of downlink and uplink transmissions,
- the number of UEs in connected state,
- etc.

Exemplary mapping tables at the base station side for UE1 and UE2 are presented in the following.

| **UE1** | **Data volume threshold** | **Index** | gNB load situation |
|---|---|---|---|
| | 100 bytes | 1 | Very high load |
| | 200 bytes | 2 | High load |
| | 400 bytes | 3 | Medium load |
| | 800 bytes | 4 | Low load |

| **UE2** | **Data volume threshold** | **Index** | gNB load situation |
|---|---|---|---|
| | 400 bytes | 1 | Very high load |
| | 500 bytes | 2 | High load |
| | 600 bytes | 3 | Medium load |
| | 800 bytes | 4 | Low load |

As apparent from the above exemplary tables, the higher the load at the base station, the lower the data volume threshold would be selected by the base station. Correspondingly, a base station being in a high-load situation broadcasts the index 2, in order for the UE1 and UE2 to use 200 bytes, respectively 500 bytes, as the data volume threshold, while a base station in a low-load situation broadcasts the index 4, in order for the UE1 and UE2 to use higher data volume thresholds, i.e. 800 bytes for both UEs. Consequently, the higher the load of a base station, the base station might be more interested in forcing more UEs to switch to the connected state, by reducing the data volume thresholds.

Determining the index based on the load situation is useful, because it allows an overloaded base station to select suitable data volume thresholds so that small data transmissions in inactive state only occur sparsely.

In addition or alternatively to the above determination of the suitable index based on the load situation of the base station, the following variation takes into account a scenario in which the base station has several transmission beams (can also be called e.g. in 5G, Synchronization Signal Block, SSB, beams) in its cell. In said case, the base station can use a data volume threshold index commonly among all transmission beams, or the base station can determine a data volume threshold index that is specific to one or a group of transmission beams.

For instance, the base station can determine one index for all transmission beams, and then correspondingly broadcast the beam-common index in system information of all transmission beams.

On the other hand, the base station can determine a different index per transmission beam or group of transmission beams, and then broadcast the beam-specific index in system information respectively in the corresponding transmission beam(s).

When determining beam-specific indexes, the base station could additionally take into account differences between the transmission beams, such as the congestion of the beam (e.g. how many UEs are located within that beam). According to one example, the number of UEs in a transmission beam is different, and the base station selects an index suitable for the transmission beam, e.g. by selecting an index with a comparatively lower data volume threshold for a highly-congested beam, and conversely a comparatively higher data volume threshold for a low-congested beam. If the beam is congested there is a shortage of resources.

From UE perspective, the UE is receiving system information via the transmission beam in which it is located. The UE thus in any case receives the system information via its current transmission beam.

The above can have different benefits. Having a common index per cell, allows reducing the signaling overhead compared to having a beam-specific index. On the other hand, using beam-specific indexes for instructing the data volume thresholds is highly flexible, and particularly useful in case e.g. the traffic load differs substantially between different beams.

Above, details on how a suitable data volume threshold index can be determined at the base station were provided. After having determined the suitable index, the base station transmits the corresponding index to the UEs. This can be done e.g. in system information that is broadcast by the base station in its cell (respectively via the transmission beams, if existent). This is beneficial, considering that the UEs in the inactive state are supposed to receive the system information, thus ensuring that all UEs have access to the data volume threshold index broadcast by the base station.

A particular 5G compliant example for such a data volume threshold index is provided in the following information element *CG-datavolumethreshold-Index:*

### CG-datavolumethreshold-Index

| | |
|---|---|
| Index ::= | Integer (0...8) |

Alternatively, the index could be provided to the UEs in a MAC Control Element.

The UEs conversely can receive the index from the serving base station accordingly, e.g. via system information broadcast by the base station, or in a MAC CE.

In the above described first solution, the data volume threshold was defined primarily for a periodic-resource-based small-data transmission, thereby providing a periodic-resource-specific index and data volume thresholds. However, the first solution is not limited to being applied in said respect, and can also be applied in the context of a random-access-based small-data transmission. The first solution can thus be applied as a standalone for the RA-based small-data transmission, independent from how the small-data transmission using the periodic radio resources is implemented. Therefore, as an example, in addition to or instead of using an index for indicating a data volume threshold for a periodic-resource-based small-data transmission, the base station and the UE could use a (further) index for indicating a (further) data volume threshold for use by the UE for a random-access-based small-data transmission.

The main differences between the previously-described periodic-resource-specific first solution and the following random-access-specific first solution will be explained in the following. Most of the assumptions taken above equally apply to this random-access-specific first solution, and reference is made to the above.

A difference is that the UE will not try performing a small-data transmission using periodic resources, for instance because no suitable periodic resources have been configured by the base station in advance. Instead, the UE, when small data becomes available for transmission, has the possibility to use the random-access procedure to transmit the small data. However, the UE will use a data volume threshold to determine whether it shall transmit the small data in the inactive state (using the random-access procedure) or whether it should transmit the small data in the connected state. In case the UE determines that the available small data is less than the data volume threshold, the UE determines that it can stay in the inactive state to transmit the small data. The UE proceeds to participate in the random access procedure with the base station to transmit the data to the base station.

Correspondingly, the first solution of the improved small-data transmission procedure provides an improved UE and base station (and respective methods) so as to implement the first solution for the RA-based transmission of small data.

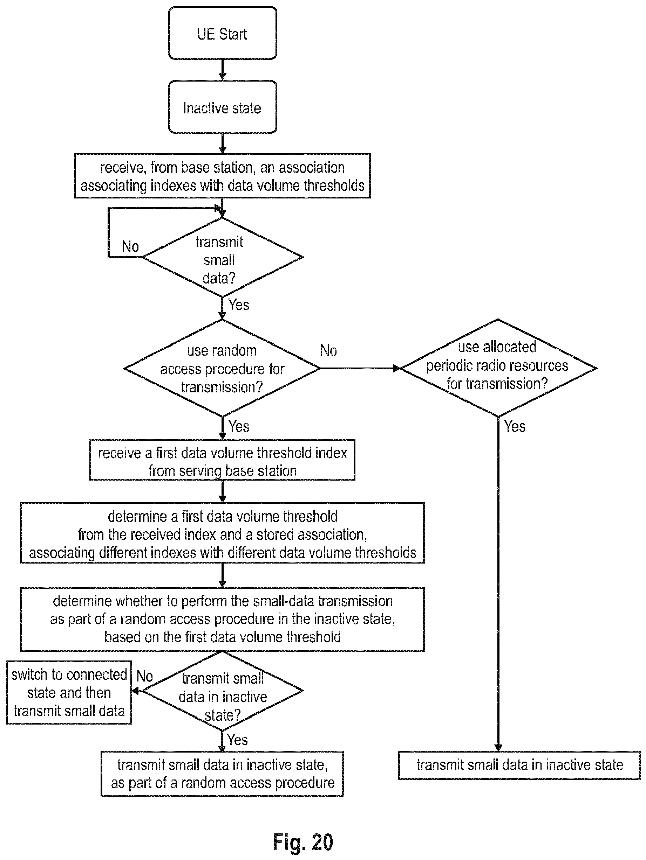

An exemplary implementation of the UE behavior is illustrated in Fig. 20. As apparent therefrom, the UE behavior is similarly structured to the UE behavior of Fig. 19, however differs in that the first data volume threshold is now used in the branch of the random access procedure. On the other hand, in Fig. 20, the branch regarding the periodic-resource-based small-data transmission is left almost undefined.

A corresponding UE could thus include a processor that separately determines a second data volume threshold, usable for determining whether to perform a random-access-based transmission of the available small data in the inactive state. The processor determines the second data volume threshold, based on a second data volume threshold index received from the serving base station, and from an association between a plurality of second data volume threshold indexes and a plurality of second data volume thresholds.

In case a volume of the available small data is below the second data volume threshold, the processor determines the UE to stay in the inactive state for transmitting the available small data, and the transmitter of the UE then performs transmission of the available small data as part of a random access procedure performed between the UE and the serving base station.

In case the volume of the available small data is above the second data volume threshold, the processor determines the UE to transition to the connected sate for transmitting the available small data and the transmitter performs transmission of the available small data when the UE is in the connected state. The RACH procedure for transmitting the small data can be a 4-step RACH procedure or a 2-step RACH procedure (for details see e.g. above description, e.g. in connection with Fig. 10 and 11).

A corresponding base station for this RA-specific first solution is also provided. Particularly, the processor of the base station generates a (further) association between a plurality of second data volume threshold indexes and a plurality of second data volume thresholds. The second data volume thresholds are usable by a UE to determine whether to perform a random-access-based transmission of small data in the active state. The transmitter of the base station transmits information on the further association to the UE. The processor determines one among the plurality of second data volume threshold indexes to be used by the UE. The transmitter transmits the determined second data volume threshold index to the UE, e.g. in system information broadcast by the base station or in a message of the Medium Access Control, MAC, protocol.

### Second solution - periodic-resource-based data volume threshold

In brief, the second solution of the improved small-data transmission procedure is based on that the UEs autonomously determine the suitable data volume threshold, based on a mapping table already stored in the UE, that associates different data volume thresholds with different values of a configuration parameter of the periodic radio resources that the UE will use for transmitting the small data. The mapping table is the same for all UEs, and each UE will determine the suitable data volume threshold taking into account the particular configuration parameter value of its own allocated periodic radio resources.

Compared to the first solution, the second solution needs less signaling overhead, because it is not necessary to transmit an index to the UEs. Furthermore, in some variant of the second solution there is no need to transmit the mapping table (here, e.g. periodicity-to-threshold), because same can be common to all UEs and can instead be pre-configured. Thus, even less signaling overhead is generated by the second solution.

In the same manner as explained for the first solution, the thus determined data volume threshold can then be used by the UE to determine whether it shall perform the small-data transmission while in the inactive state using these periodic resources or whether the UE shall change to the connected state for the small-data transmission.

From the UE perspective, the second solution involves e.g.:
- determining the value of the configuration parameter of the periodic resources that are allocated to the UE,
- determining the first data volume threshold from a mapping table that associates different values of the configuration parameter with different data volume thresholds, using the allocated value of the configuration parameter,
- in case the mapping table is generated and distributed by the serving base station, the UE may also have to receive the mapping table from the base station; otherwise, the mapping table is pre-configured in the UE, and a reception of same from the base station is not necessary.

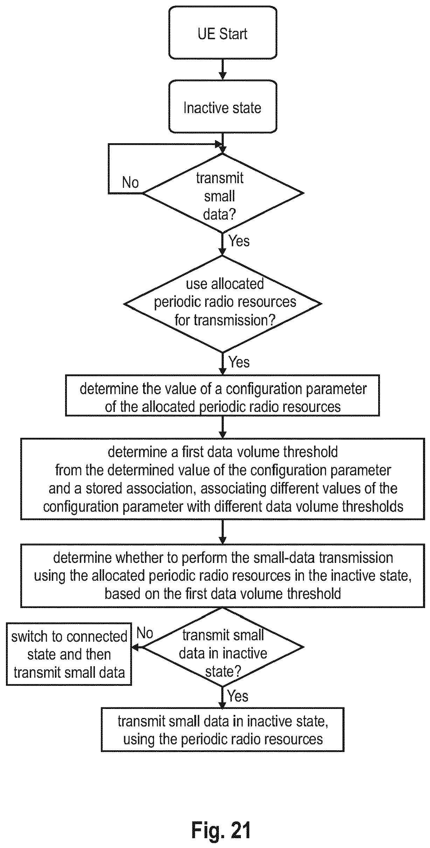

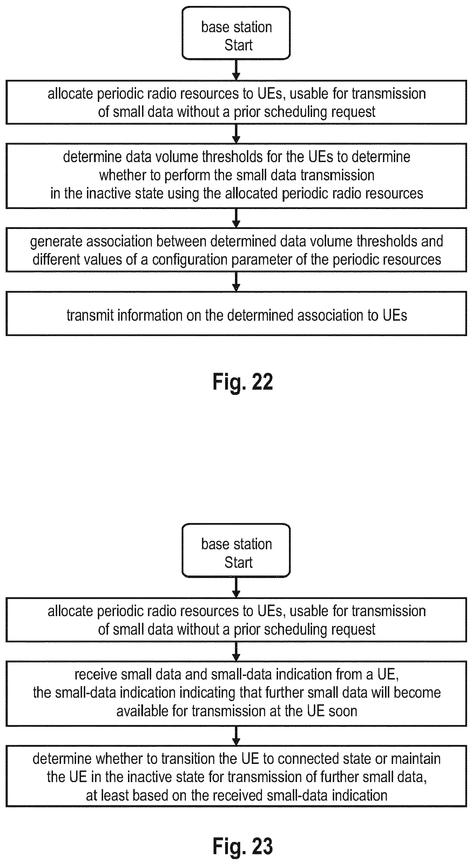

From the base station perspective, the second solution involves, e.g.:
- determining the content of the mapping table, i.e. which data volume threshold is associated with which value of a configuration parameter of periodic resources,
transmitting the mapping table to the UE(s).An exemplary UE behavior for this second solution is illustrated in Fig. 21. A corresponding exemplary base station behavior for this second solution is illustrated in Fig. 22.

For this second solution similar assumptions are made as for the first solution. The UE is assumed to already be configured with the periodic radio resources, as already mentioned above. The periodic resources are configured based on one or more configuration parameters, which could include e.g. the time periodicity of the periodic radio resources or a size of the periodic radio resources in the frequency (e.g. number of subcarriers) and/or time domain (e.g. number of OFDM symbols). Dependent on how the periodic radio resources are configured, also other configuration parameters are used, e.g. one or more of the numerous parameters in the *ConfiguredGrantConfig* information element of an exemplary 3GPP implementation as mentioned above.

For the second solution, one of the configuration parameters of the periodic resources is used for the purpose of determining a data volume threshold as part of the improved small-data transmission procedure, e.g. the periodicity or the size mentioned above (but also other configuration parameters could serve the purpose). In the following, it is exemplary assumed that the relevant configuration parameter is the periodicity of the periodic radio resources, e.g. in ms.

Therefore, different periodicities of the periodic resources are associated with different data volume thresholds. One exemplary underlying concept is that the smaller a periodicity, the larger the corresponding data volume threshold. But also other concepts can be used to determine which periodicities are associated with which data volume thresholds.

An exemplary mapping table between the periodicity and data volume thresholds is provided in the following:

| **Data Volume Threshold (bytes)** | **CG Periodicity** |
|---|---|
| 800 | 1ms to 40 ms |
| 400 | 41ms to 60ms |
| 200 | 61 ms to 100ms |

As apparent therefrom, the smaller a periodicity, the larger the corresponding data volume threshold. The benefit is that a UE with shorter periodicity is allowed to transmit a larger amount of small data in the inactive state, which reduces the signaling overhead as well as the power consumption.

The periodicity-to-threshold mapping table can be commonly used between different UEs, which is different from implementations of the above-explained first solution, according to which the index-to-threshold mapping table is primarily specific to each UE. Therefore, according to the second solution, different UEs use the same mapping table, but may still use different data volume thresholds.

For the following, it is assumed that UEs, UE1-UE4, have been configured with periodic radio resources, respectively having the following values for the configuration parameter, here the periodicity.

| | **CG Periodicity** |
|---|---|
| UE1 | 40 |
| UE2 | 80 |
| UE3 | 60 |
| UE4 | 100 |

As a result, each UE respectively applies the above mapping table to thereby select the data volume thresholds, such that UE1 determines a data volume threshold of 800 bytes, UE2 and UE4 determine a data volume threshold of 200 bytes, and UE3 determines a data volume threshold of 400 bytes.

According to one variant of the second solution, the base station can prepare the above-discussed periodicity-to-threshold mapping table and distribute same to the UEs in its cell. When preparing the mapping table, the base station can take different parameters into account, such as the current traffic load situation of the base station.

Moreover, the base station can also update the values of the data volume thresholds of the mapping table and then re-distribute the updated mapping table to the UEs. Thereby, the base station can dynamically change the data volume thresholds to be used by the UEs and adapt same to the current situation, e.g. the load situation at the base station.

For instance, the base station can differentiate between high-load situations and low-load situations. The data volume thresholds can be adapted by using relatively smaller data volume thresholds in case the base station experiences a high load (compared to a low-load situation), so that UEs may change to RRC connected state earlier and less radio resources need be reserved for the periodic resources. Conversely, the base station when being in a high-load situation, could adapt the data volume thresholds to be relatively larger, so that UEs change to the RRC connected state later (e.g. comparatively more small data can still be transmitted in the inactive state), so as to avoid the extra burden of having more UEs in connected state.

The mapping table can be transmitted by the base station in system information that it broadcasts in its cell.

Moreover, the base station can also define a mapping table such that no inactive small-data transmission shall be possible for certain periodicities of the periodic resources. One exemplary possibility would be to still keep a corresponding entry in the mapping table, but configuring a data volume threshold of 0 bytes for that periodicity or range of periodicities. For instance, the base station could configure the mapping table such that UEs that are configured with periodic resources with a periodicity above a certain periodicity threshold are not allowed to transmit small data in the inactive sate; put differently, only UEs that are configured with periodic radio resources having a periodicity below a certain periodicity can transmit small data in the inactive state. A corresponding exemplary mapping table can be defined as follows:

| **Data Volume Threshold (bytes)** | **CG Periodicity** |
|---|---|
| 800 | 1ms to 40 ms |
| 400 | 41ms to 60ms |
| 0 | 61ms to 100ms |

As apparent, a data volume threshold of 0 bytes would be used by any UEs having configured periodic radio resources with a periodicity larger than 60 ms. In said case, the data volume threshold of 0 bytes would inevitably lead to a situation where the UE determines that it has to transition to the connected state for transmitting available small data.

In the above description, it was exemplarily assumed that there is one periodicity-to-threshold mapping table, applicable in common for all UEs in the same manner. Each UE would apply said mapping table, independently from e.g. the priority of the UE or the logical channel to which the small data is assigned. In further variants of the second solution, there can be more than one periodicity-to-threshold mapping tables.

For instance, instead of using one mapping table in common for all logical channels, there can be one mapping per one logical channel or per group of logical channels. In turn, the UE would also take into account the logical channel to which the small data is assigned, when determining the data volume threshold. In particular, when small data becomes available for transmission, the UE first determines the logical channel to which the available small data belongs. Then, the UE determines from among all the logical-channel-specific mapping tables that one that corresponds to the determined logical channel of the small data. Using that mapping table specific to the logical channel of the small data, the UE then determines the data volume threshold that corresponds to the configuration parameter of its own allocated periodic radio resources.

For instance, a group of logical channels for which one mapping table is provided could comprise logical channels with a same or similar characteristic, such as a priority, QoS

Differentiating the mapping tables between logical channels could be beneficial in that the data volume thresholds could be specifically configured that are suitable for that logical channel (or group of logical channels). Furthermore, the configuration of the mapping tables could be simpler, because it is not necessary to determine a consolidated (common) mapping table taking into account all the possible logical channels; it may be easier to design the corresponding base station algorithm.

For example, logical channels could have different priorities (e.g. in terms of low-latency requirements), such that one logical channel #1 would reflect a high priority (e.g. a strict low-latency requirement) and another logical channel #2 would reflect a low priority (e.g. relayed latency requirements). In such a case, high-priority logical channel #1 could be configured with comparatively larger data volume thresholds than low-priority logical channel #2, so as to ensure that small data for logical channel #1 is less likely to suffer from additional delays incurred if the UE has to first transition to the connected state. Or, larger data volumes can only be transmitted by UEs that have a higher priority or for services (and logical channels) with a higher priority.

Another example could be that logical channels could have different traffic pattern. As an example, logical channel 1 has traffic every 5 min, while logical channel has traffic every 1 hour. In said case, the longer the periodicity of the traffic pattern, the smaller the data volume threshold could be configured. According to another variant, different priorities of the UEs could be differentiated for the periodicity-to-threshold mapping tables. Correspondingly, there could be one such mapping per UE priority or set of UE priorities. For example, UE priorities could be a premium UE vs a basic UE, or other similar categories.

In turn, the UE would also take into account its own UE priority, when determining the data volume threshold. In particular, when small data becomes available for transmission, the UE determines its own priority and from among all the priority-specific mapping tables that one that corresponds to the determined UE priority. Using that UE-priority-specific mapping table, the UE then determines the data volume threshold that corresponds to the configuration parameter of its own allocated periodic radio resources.

For instance, a lower power consumption could be facilitated for a premium UE (rather than a basic UE), by comparatively configuring larger data volume thresholds.

In addition, or alternatively, a default periodicity-to-threshold mapping table can be pre-configured in the UE, e.g. based on information provided in a 3GPP standard (e.g. encoded into the software of the UE), based on information provided in the SIM of the UE (e.g. a parameter defined by the operator of the UE), or preconfigured at the beginning when starting the UE. This default mapping table can be used directly by each UE to determine the corresponding data volume threshold that corresponds to the periodic radio resources allocated in advance by the base station.

According to a further variant, in case the base station provides a further periodicity-to-threshold mapping table (e.g. in system information), the UE need not use the default mapping table any more, but instead may use the mapping dynamically provided by the base station.

According to one exemplary 5G compliant implementation, the periodicity-to-threshold mapping table can be transmitted from the base station to the UEs, using the following information element.

### CG datavolumethreshold information element

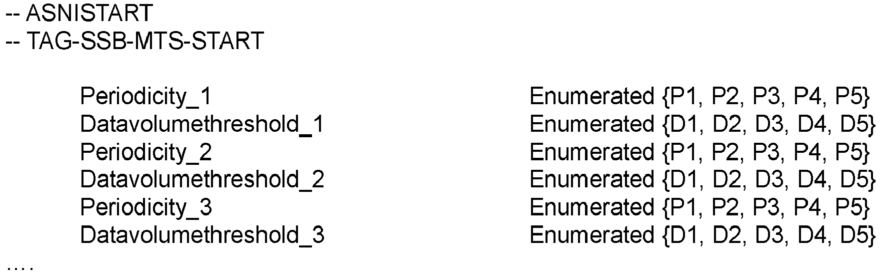

As apparent from the information element, several combinations of a periodicity and a data volume threshold can be configured and thus provided to the UEs. In one exemplary variant, this information element can be transmitted in a message of the RRC protocol.

### Third solution - no data volume threshold for periodic-based small-data transmission

In the above two solutions, it was assumed that a data volume threshold is used by the UE for determining whether to perform the small-data transmission in the inactive state. According to the following third solution, it is assumed that the UE does not use a data volume threshold to determine whether to transmit small data in the inactive state using previously-allocated periodic radio resources. Instead, the UE may always first start transmitting the small data in the inactive state using these periodic resources, but additionally provides the base station with assistance information to assist the base station to decide on whether the UE shall be allowed to stay in the inactive state or whether the UE shall be transitioned to the connected state.

For instance, the data volume threshold mentioned in the agreement of 3GPP might only be implemented for the RA-based small-data transmission but not for the CG-based small data transmission (periodic-resource-based SDT). Such an implementation of the RA-based small-data transmission with the data volume threshold is not the focus of the present third solution, which rather focuses on the scenario where the UE uses the periodic resources allocated by the base station in advance for the small-data transmission.

The base station according to the third solution thus includes the following. A processor of the base station allocates periodic radio resources to one or more user equipments, UEs. The allocated periodic radio resources are usable by any one of the one or more UEs, for transmission of small data without a prior scheduling request. A receiver of the base station receives the small data and further receives a small-data indication from a UE. The small-data indication indicates that small data will become available for transmission at the UE soon. The processor determines whether to transition the UE to connected state or maintain the UE in the inactive state for transmission of further small data, at least based on the received small-data indication.

One example of the third solution provides a UE, that includes the following. A processor of the UE determines that small data is available for transmission, the UE being in an inactive state, out of a connected state, an idle state and the inactive state. A transmitter of the UE transmits the available small data when in the inactive state using periodic radio resources that are usable for transmission of small data without a prior scheduling request from the UE, the periodic radio resources being allocated in advance by a serving base station. The processor determines whether further small data will become available for transmission within a next brief period of time. The processor generates a small-data indication, in case the processor determines that further small data will become available for transmission within the next brief period of time, the small-data indication indicating that small data will become available for transmission soon. The transmitter, when transmitting the available small data, also transmits the generated small-data indication together with the available small data using the allocated periodic radio resources.

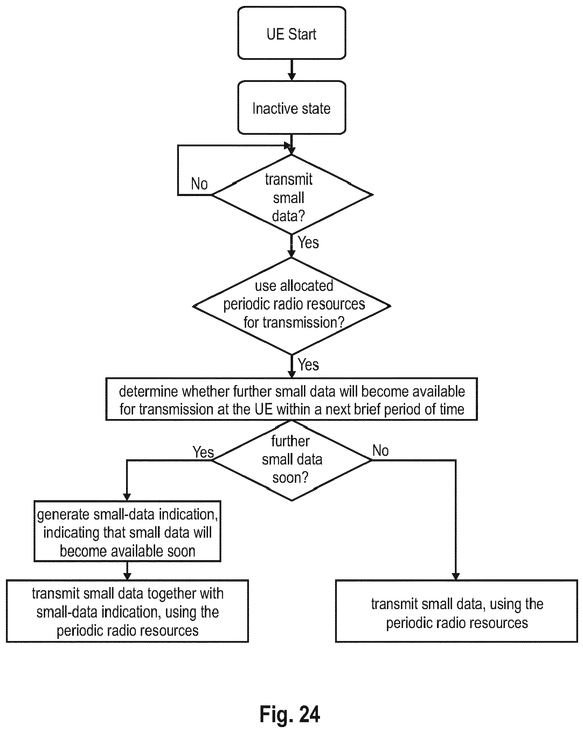

A corresponding sequence diagram for an exemplary base station behavior in line with the above-discussed base station is illustrated in **Fig. 23****.** A corresponding sequence diagram for an exemplary UE behavior in line with the above-discussed UE is illustrated in **Fig. 24****.**

According to one variant, the third solution also includes a mechanism of whether to transmit a buffer status report. In particular, after small data becomes available for transmission, the UE determines whether all the available small data can be transmitted using the allocated periodic resources, where in the negative case (i.e. some of the small data would remain in the transmission buffer for transmission) a corresponding buffer status report can be transmitted together with the small data. The buffer status report indicates the remaining amount of the available small data that remains in the UE buffer. On the other hand, in the positive case (i.e. all small data can be transmitted, and none remains in the UE transmission buffer), the UE does not need to prepare and transmit the buffer status report.

Assuming that the UE uses this buffer status report mechanism, in one exemplary variant the above described small-data indication transmission can be transmitted in different manners. Inparticular, the small-data indication mechanism can be performed irrespectively of whether a buffer status report is transmitted or not. Consequently, the small-data indication mechanism and the buffer status report mechanism could be performed in parallel or sequentially, and none, one or both of the small-data indication and the buffer status report can be transmitted together with the small data.

According to another exemplary variant, the small-data indication mechanism need not be performed in case some small-data remains in the transmission buffer and the UE transmits the buffer status report to the base station. Conversely, only if no small-data remains in the transmission buffer and no buffer status report would be transmitted, the UE proceeds to perform the small-data indication mechanism as described above and possibly transmits the small-data indication together with the small data to the base station (the latter, in case further small data will become available for transmission soon). In this variant, the UE would transmit either the buffer status report or the small-data indication, or none of them, but not both of them.

According to the above-described third solution and its variants, the UE always initiates the small data transmission in the inactive state when periodic resources, allocated in advance by the base station, are available, regardless of the amount of small data. This reduces signaling overhead as well as the power consumption at the UE side.

Furthermore, the UE assists the base station in the determination of whether to then transition the UE into the connected state for the small-data transmission, based on assistance information transmitted by the UE. This assistance information can be one or both of the buffer status report and the small-data indication (see above variants).

In one exemplary implementation, the small-data indication can be transmitted as part of a MAC Control Element.

### Fourth solution - index-based enabling/disabling of periodic radio resources for SDT

The following fourth solution is different from the above three solutions in that it does not relate to how the UE determines whether or not to perform the small-data transmission in the active state. Rather, the fourth solution revolves around providing a mechanism for the base station to enable respectively disable particular periodic resources that the UE(s) may use for the transmission of small data, while the UE is in the inactive state, in a simple and dynamic manner. Correspondingly, the fourth solution can be used independently from the above first to third solutions, as a standalone solution or in combination with one of these first to third solutions.

This fourth solution relies on the base station transmitting a corresponding index e.g. in system information, from which each UE then can derive on its own, whether its preconfigured periodic resources are enabled or disabled (e.g. can be used or not for a potential small data transmission). In order to be able to interpret the received enable/disable index, the UE has a corresponding association (e.g. in the form of a mapping table), that associates different indexes with different values of a configuration parameter of the periodic resources.

From the UE perspective, the fourth solution involves e.g.:
- being configured with periodic radio resources usable for the transmission of small data in the inactive state, the periodic radio resource having a configuration parameter,
- storing an association, associating different enable/disable indexes with different values of a configuration parameter of allocatable periodic resources,
- receiving an enable/disable index from the base station,
- determining whether to enable or disable the UE's own periodic resources, using the received enable/disable index and the stored association,
- enable or disable the UE's own periodic resources following the result of the preceding determination.

From base station perspective, the fourth solution involves, e.g.
- configuring periodic resources to the UEs usable by the UEs for the transmission of small data in the inactive state, the periodic radio resource having a configuration parameter,
- determining an index for enabling or disabling periodic resources having a certain value or values of a configuration parameter, using an association that associates different enable/disable indexes with different values of a configuration parameter of allocatable periodic resources,
- transmit the enable/disable index to the UEs.

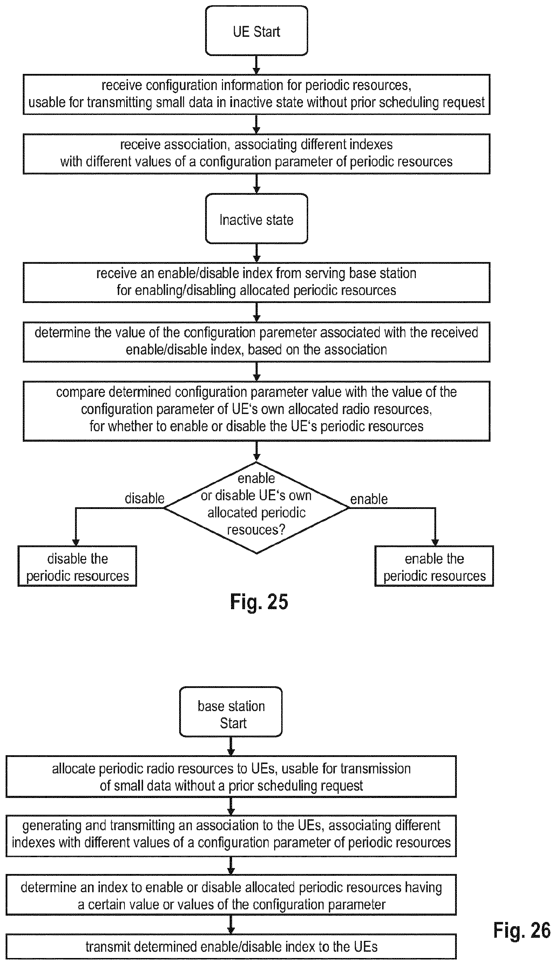

An exemplary UE behavior for this fourth solution is illustrated in **Fig. 25****.** A corresponding exemplary base station behavior for this fourth solution is illustrated in **Fig. 26****.**

The periodic resources are configured based on one or more configuration parameters, which could include e.g. the time periodicity of the periodic radio resources or a size of the periodic radio resources in the frequency (e.g. number of subcarriers) and/or time domain (e.g. number of OFDM symbols). Dependent on how the periodic radio resources are configured, also other configuration parameters are used, e.g. one or more of the numerous parameters in the *ConfiguredGrantConfig* information element of an exemplary 3GPP implementation as mentioned above.

In the following, it is exemplary assumed that the relevant configuration parameter is the periodicity of the periodic radio resources, e.g. in ms.

An exemplary mapping table between an index and a periodicity is provided in the following:

| **Index** | **CG Periodicity** |
|---|---|
| 1 | 40 ms |
| 2 | 60 ms |
| 3 | 80ms |
| 4 | 100ms |

According to one exemplary solution, in case the base station transmits the index 3, the UE would determine that the received index indicates a periodicity of 80ms, using the above mapping table. According to one example, the index is to be interpreted such that periodic resources having a periodicity smaller than the indicated periodicity, are disabled, while other are enabled (kept enable). Consequently, the index would indicate a minimum periodicity of periodic resources that can be used.

For instance, in case the base station transmits the index 3, the UE would determine that the received index indicates a periodicity of 80ms. The UE would then determine the periodicity of its own allocated periodic resources, and compare same against the indicated minimum periodicity. Assuming that the UE has allocated periodic resources with a periodicity of 60 ms, the UE would determine that the periodic radio resource are disabled by the enable/disable index and thus should no longer be used. Conversely, assuming that another UE has allocated periodic resources with a periodicity of 100 ms, the UE would determine that the periodic radio resource are still enable by the enable/disable index and can thus still use the resources in case small data is available for transmission.

Alternatively, the enable/disable index could indicate a maximum periodicity of periodic resources that can be used; in that case, periodic resources with a periodicity larger than the periodicity indicated by the index would be disabled and not used, while periodic resources with a periodicity smaller than the periodicity indicated by the index would be enable and still be usable.

According to one example, the enable/disable index can be transmitted to the UE, e.g. in system information broadcast by the base station or in a message of the Medium Access Control, MAC, protocol.

According to one exemplary 5G compliant implementation, the index-to-periodicity association can be transmitted from the base station to the UEs, using the following information element:

### ConfiguredGrantConfig information element

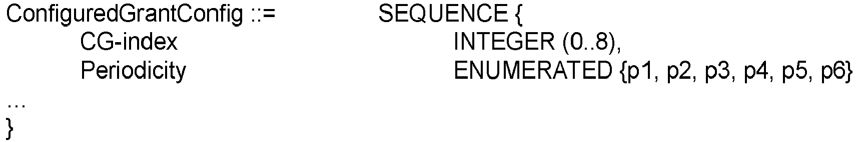

As apparent, the information element allows defining several combinations of an enable/disable index with a particular periodicity (being an example of the above-mentioned configuration parameter). In one exemplary variant, this information element can be transmitted in a message of the RRC protocol.

The fourth solution provides a mechanism that allows the base station to dynamically enable and disable periodic resources, and thereby adapting the usable periodic resources to present circumstance, e.g. to the load situation of the base station.

### Further Aspects

According to a first aspect, a user equipment, is provided that includes the following. A processor of the UE determines a first data volume threshold. The processor determines to transmit small data, that became available for transmission, in an inactive state or in a connected state, based on a volume of the available small data and the first data volume threshold. The UE is in the inactive state out of the connected state, an idle state and the inactive state. A transmitter of the UE performs transmission of the available small data. The first data volume threshold is to be used for determining whether to perform the transmission of available small data in the inactive state using periodic radio resources that are usable for transmission of small data without a prior scheduling request from the UE, the periodic radio resources being allocated in advance by a serving base station. On the other hand, the first data volume threshold is not to be used for determining whether to perform a random-access-based transmission of available small data in the inactive state.

According to a second aspect provided in addition to the first aspect, wherein the processor determining the first data volume threshold includes:
- receiving a data volume threshold index from thea serving base station,
- determining the first data volume threshold from an association between a plurality of data volume threshold indexes and a plurality of data volume thresholds, using the received data volume threshold index.

In optional implementation, the receiver receiving the data volume threshold index from the serving base station includes:
- receiving the data volume threshold index in system information broadcast by the serving base station, or
- receiving the data volume threshold index in a message of the Medium Access Control, MAC, protocol from the serving base station.

According to a third aspect provided in addition to the second aspect, the association is specific to the UE, optionally wherein the receiver, when in operation, receives information on the association from the serving base station, optionally in a message of a Radio Resource Control, RRC, protocol. In an optional implementation, the receiver monitors system information for a data volume threshold index that is broadcast by the serving base station in all of a plurality of beams in the entire cell, or wherein the receiver monitors system information for a data volume threshold index, that is broadcast by the serving base station in one of a plurality of beams.

According to a fourth aspect provided in addition to the second or third aspect, the processor applies the first data volume threshold commonly to all logical channels configured at the UE and to which small data can be assigned, such that the processor, when in operation, considers the volume of the available small data, irrespective from the logical channel. In an optional implementation, there is one common association for a plurality of logical channels.

According to a fifth aspect, provided in addition to the second or third aspect, the processor, when determining the first data volume threshold, takes into account a logical channel to which the available small data is assigned. According to one optional implementation, there is one association per logical channel, and the processor, when determining the first data volume threshold, determines that logical-channel-specific association that corresponds to the logical channel to which the available small data is assigned and then determines the first data volume threshold from that determined logical-channel-specific association using the received data volume threshold index. According to one optional implementation, a high-priority logical channel for small-data transmission is associated with a higher data volume threshold than a low-priority logical channel for small-data transmission.

According to a sixth aspect, provided in addition to any of the second to fifth aspects, the processor separately determines a second data volume threshold, usable for determining whether to perform a random-access-based transmission of the available small data in the inactive state. The processor determining the second data volume threshold includes:
- receiving a second data volume threshold index from the serving base station,
- determining the second data volume threshold from another association between a plurality of second data volume threshold indexes and a plurality of second data volume thresholds, using the receiving second data volume threshold index.

In an optional implementation, in case a volume of the available small data is below the second data volume threshold, the processor determines the UE to stay in the inactive state for transmitting the available small data and the transmitter performs transmission of the available small data as part of a random access procedure performed between the UE and the serving base station. In case the volume of the available small data is above the second data volume threshold, the processor determines the UE to transition to the connected sate for transmitting the available small data and the transmitter performs transmission of the available small data when the UE is in the connected state. In an optional implementation, the random access procedure includes two steps, and the transmission of the available small data is performed with a first message of the two-step random access procedure. In an optional implementation, the random access procedure includes four steps, and the transmission of the available small data is performed with a third message of the four-step random access procedure.

According to a seventh aspect provided in addition to the first aspect, the processor determining the first data volume threshold includes:
- determining a value of a configuration parameter of periodic radio resources that are usable for transmission of small data without a prior scheduling request from the UE, the periodic radio resources being allocated in advance by the serving base station,
- determining the first data volume threshold from an association, associating a plurality of different data volume thresholds and different values of the configuration parameter of the allocated periodic radio resources, using the determined value of the configuration parameter of the periodic radio resources.

In an optional implementation, the configuration parameter of the periodic radio resources is a time periodicity of the periodic radio resources, or a size of the periodic radio resources in one or more of a frequency domain and time domain. In an optional implementation, the association is such that the smaller a periodicity of the periodic radio resources is, the larger is the corresponding data volume threshold.

According to an eighth aspect provided in addition to the seventh aspect, the processor, when determining the first data volume threshold takes also into account a priority of the UE or a logical channel to which the available small data is assigned. In an optional implementation, there is one association per UE priority or logical channel, and the processor, when determining the first data volume threshold, determines that association that corresponds to the UE priority or that corresponds to the logical channel to which the available small data is assigned. The processor then determines the first data volume threshold from that determined association using the determined value of the characteristic of the periodic radio resources. In an optional implementation, a high-priority logical channel for small-data transmission is associated with a higher data volume threshold than a low-priority logical channel for small-data transmission. In an optional implementation, a high-priority UE is associated with a higher data volume threshold than a low-priority UE.

According to a ninth aspect provided in addition to the seventh or eighth aspect, the UE obtains information on the association between the plurality of different data volume thresholds and different values of the characteristic of the allocated periodic radio resources from one or more of:
- system information broadcast by the serving base station, and
- information pre-configured in the UE.

According to a tenth aspect provided in addition to one of the first to ninth aspects, in case a volume of the available small data is below the first data volume threshold, the processor determines the UE to stay in the inactive state for transmitting the available small data and the transmitter performs transmission of the available small data using the allocated periodic radio resources. In case the volume of the available small data is above the first data volume threshold, the processor determines the UE to transition to the connected state for transmitting the available small data and the transmitter performs transmission of the available small data when the UE is in the connected state.

According to an eleventh aspect, provided in addition to one of the first to tenth aspects, the receiver receives a configured-grant enable/disable index from the serving base station. The processor determines a value of a configuration parameter of periodic radio resources that are associated with the received configured-grant enable/disable index, based on a further association associating a plurality of configured-grant enable/disable indexes with different values of the configuration parameter of the periodic radio resources. The processor determines whether to enable or disable periodic radio resources that have been allocated in advance to the UE by the serving base station and that are usable for transmitting small data, based on the determined value of the configuration parameter of periodic radio resources. In an optional implementation, the configuration parameter of the periodic radio resources is a periodicity. The processor disables the configured periodic radio resources, in case a periodicity of the configured periodic radio resources is smaller or larger than the periodicity indicated by the received configured-grant enable/disable index. In an optional implementation, the processor keeps the configured periodic radio resources enabled, in case the periodicity of the configured periodic radio resources is equal to or larger than the periodicity indicated by the configured-grant enable/disable index. In an optional implementation, wherein the receiver receives the configured-grant enable/disable index in system information broadcast by the serving base station.

According to a twelfth aspect, pa UE is provided comprising the following. A processor of the UE determines that small data is available for transmission, the UE being in an inactive state, out of a connected state, an idle state and the inactive state. A transmitter of the UE transmits the available small data when in the inactive state using periodic radio resources that are usable for transmission of small data without a prior scheduling request from the UE, the periodic radio resources being allocated in advance by a serving base station. The processor determines whether further small data will become available for transmission within a next brief period of time. The processor generates a small-data indication, in case the processor determines that further small data will become available for transmission within the next brief period of time, the small-data indication indicating that small data will become available for transmission soon. The transmitter, when transmitting the available small data, also transmits the generated small-data indication together with the available small data using the allocated periodic radio resources.

According to a thirteenth aspect, provided in addition to the twelfth aspect, the processor, in case not all of the available small data can be transmitted using the allocated periodic radio resources, prepares a buffer status report indicating the remaining amount of the available small data in a buffer of the UE that is still available for transmission by the UE, and the prepared buffer status report is transmitted together with the available small data using the allocated periodic radio resources. Optionally, the small-data indication is carried in a control element of a Medium Access Control, MAC, protocol.

According to a fourteenth aspect, provided in addition to one of the first to thirteenth aspects, the inactive state, the connected state and the idle state are related to the Radio Resource Control, RRC, protocol.

According to a fifteenth aspect, a method is provided comprising the following steps performed by a UE:
determining a first data volume threshold,
determining to transmit small data, that became available for transmission, in an inactive state or in a connected state, based on a volume of the available small data and the first data volume threshold, wherein the UE is in the inactive state out of the connected state, an idle state and the inactive state,
performing transmission of the available small data, and
wherein the first data volume threshold is to be used for determining whether to perform the transmission of available small data in the inactive state using periodic radio resources that are usable for transmission of small data without a prior scheduling request from the UE, the periodic radio resources being allocated in advance by a serving base station,
wherein the first data volume threshold is not to be used for determining whether to perform a random-access-based transmission of available small data in the inactive state.

According to a sixteenth aspect, a base station is provided comprising the following. A processor of the base station allocates periodic radio resources to one or more user equipments, UEs, the allocated periodic radio resources being usable by any one of the one or more UEs, for transmission of small data without a prior scheduling request. The processor determines a plurality of data volume thresholds to be used by the UEs for determining whether to perform the transmission of small data in the inactive state using the allocated periodic radio resources, wherein the plurality of data volume thresholds are not to be used by the UEs for determining whether to perform a random-access-based transmission of small data in the inactive state. A transmitter of the base station transmits information on the determined plurality of data volume thresholds to the UEs.

According to a seventeenth aspect, provided in addition to the sixteenth aspect, the information on the determined plurality of data volume thresholds comprises an association between a plurality of data volume threshold indexes and the plurality of data volume thresholds. The processor determines one among the plurality of data volume threshold indexes to be used by the UE. The transmitter transmits the determined one data volume threshold index. In an optional implementation, the determined data volume threshold index is transmitted in system information broadcast by the base station or in a message of the Medium Access Control, MAC, protocol from the base station.

According to a eighteenth aspect, provided in addition to the seventeenth aspect, the processor determines the association to be specific to one UE. In an optional implementation, the processor, when performing the determining of the UE-specific association, takes into account one or more of:
- a traffic pattern in the time domain of that UE,
- a priority of that UE,
- typical packet sizes received from that UE.

In an optional implementation, the transmitter transmits the information on the UE-specific association to the corresponding UE, optionally in a message of the Radio Resource Control, RRC, protocol.

According to a nineteenth aspect, provided in addition to the seventeenth or eighteenth aspect, the processor determines the one among the plurality of data volume threshold indexes to be used by the UE as being common to all beams in the entire cell of the base station or specific to one or more beams in the entire cell. In an optional implementation, the beam-common data volume threshold index is transmitted on all beams of the entire cell. In an optional implementation, the beam-specific data volume threshold index is transmitted only in that beam to which the beam-specific data volume threshold belongs.

According to a 20^{th} aspect, provided in addition to any one of the seventeenth to nineteenth aspects, the processor, when determining the one among the plurality of data volume threshold indexes to be used by the UE, takes into account a load situation of the base station, including one or more of:
- the amount of radio resources available for scheduling of downlink and uplink transmissions,
- number of UEs in connected state.

In an optional implementation, in case the load situation of the base station is a high-load situation, the processor determines a data volume threshold index associated with a lower data volume threshold than in case the load situation of the base station is a low-load situation.

According to a 21^{st} aspect, provided in addition to any one of the seventeenth to 20^{th} aspects, the association between the plurality of data volume threshold indexes and the plurality of data volume thresholds is specific to one logical channel to which small data is assigned. There is one such association associating between a plurality of data volume threshold indexes and a plurality of data volume thresholds for each of one or more of these logical channels. In an optional implementation, a high-priority logical channel is associated with a higher data volume threshold than a low-priority logical channel.

According to a 22^{nd} aspect, provided in addition to any one of the seventeenth to 21^{st} aspects, the processor generates a further association between a plurality of second data volume threshold indexes and a plurality of second data volume thresholds. The second data volume thresholds are usable by a UE to determine whether to perform a random-access-based transmission of small data in the active state. The transmitter transmits information on the further association to the UE. In an optional implementation, the processor determines one among the plurality of second data volume threshold indexes to be used by the UE. The transmitter transmits the determined second data volume threshold index to the UE, optionally in system information broadcast by the base station or in a message of the Medium Access Control, MAC, protocol.

According to a 23^{rd} aspect, provided in addition to the sixteenth aspect, the information on the determined plurality of data volume thresholds comprises an association that associates a plurality of different data volume thresholds and different values of a configuration parameter of periodic radio resources that can be allocated to UEs in advance by the base station. These periodic radio resources are then usable by a UE to transmit small data without a prior scheduling request. In an optional implementation, the configuration parameter of the periodic radio resources is a time periodicity of periodic radio resources, or a size of periodic radio resources in one or more of a frequency domain and time domain. In an optional implementation, the association is such that the smaller a periodicity of the periodic radio resources is, the larger is the corresponding data volume threshold. In an optional implementation, the information on the association, which associates the plurality of different data volume thresholds and the different values of a characteristic of periodic radio resources, is transmitted by the base station using system information broadcast by the base station.

According to a 24^{th} aspect, provided in addition to the 23^{rd} aspect, the association is specific to a UE priority or a logical channel to which small data is assigned. There is one such association for each UE priority or for each logical channel.

According to a 25^{th} aspect, a method is provided comprising the following steps performed by a base station:
allocating periodic radio resources to one or more user equipments, UEs, the allocated periodic radio resources being usable by any one of the one or more UEs, for transmission of small data without a prior scheduling request,
determining a plurality of data volume thresholds to be used by the UEs for determining whether to perform the transmission of small data in the inactive state using the allocated periodic radio resources, wherein the plurality of data volume thresholds are not to be used by the UEs for determining whether to perform a random-access-based transmission of small data in the inactive state,
transmitting information on the determined plurality of data volume thresholds to the UEs.

According to a 26^{th} aspect, an integrated circuit is provided, which controls a process of a user equipment, the process comprising the following steps performed by the user equipment:
determining a first data volume threshold,
determining to transmit small data, that became available for transmission, in an inactive state or in a connected state, based on a volume of the available small data and the first data volume threshold, wherein the UE is in the inactive state out of the connected state, an idle state and the inactive state,
performing transmission of the available small data, and
wherein the first data volume threshold is to be used for determining whether to perform the transmission of available small data in the inactive state using periodic radio resources that are usable for transmission of small data without a prior scheduling request from the UE, the periodic radio resources being allocated in advance by a serving base station,
wherein the first data volume threshold is not to be used for determining whether to perform a random-access-based transmission of available small data in the inactive state.

According to a 27^{th} aspect, an integrated circuit is provided, which, in operation, controls a process of a base station, the process comprising the following steps performed by the base station:
allocating periodic radio resources to one or more user equipments, UEs, the allocated periodic radio resources being usable by any one of the one or more UEs, for transmission of small data without a prior scheduling request,
determining a plurality of data volume thresholds to be used by the UEs for determining whether to perform the transmission of small data in the inactive state using the allocated periodic radio resources, wherein the plurality of data volume thresholds are not to be used by the UEs for determining whether to perform a random-access-based transmission of small data in the inactive state,
transmitting information on the determined plurality of data volume thresholds to the UEs.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (loT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a processor, which in operation, determines a first data volume threshold,
the processor, which in operation, determines to transmit small data, that became available for transmission, in an inactive state or in a connected state, based on a volume of the available small data and the first data volume threshold, wherein the UE is in the inactive state out of the connected state, an idle state and the inactive state,
a transmitter, which in operation, performs transmission of the available small data, and
wherein the first data volume threshold is to be used for determining whether to perform the transmission of available small data in the inactive state using periodic radio resources that are usable for transmission of small data without a prior scheduling request from the UE, the periodic radio resources being allocated in advance by a serving base station,
wherein the first data volume threshold is not to be used for determining whether to perform a random-access-based transmission of available small data in the inactive state.

2. The UE according to claim 1, wherein the processor determining the first data volume threshold includes:
• receiving a data volume threshold index from the serving base station,
• determining the first data volume threshold from an association between a plurality of data volume threshold indexes and a plurality of data volume thresholds, using the received data volume threshold index,
optionally wherein the receiver receiving the data volume threshold index from the serving base station includes:
• receiving the data volume threshold index in system information broadcast by the serving base station, or
• receiving the data volume threshold index in a message of the Medium Access Control, MAC, protocol from the serving base station.

3. The UE according to claim 2, wherein the association is specific to the UE, optionally wherein the receiver, when in operation, receives information on the association from the serving base station, optionally in a message of a Radio Resource Control, RRC, protocol,
optionally wherein the receiver, when in operation, monitors system information for a data volume threshold index that is broadcast by the serving base station in all of a plurality of beams in the entire cell, or wherein the receiver, when in operation, monitors system information for a data volume threshold index, that is broadcast by the serving base station in one of a plurality of beams.

4. The UE according to any of claims 2 or 3, wherein the processor, when determining the first data volume threshold, takes into account a logical channel to which the available small data is assigned,
optionally wherein there is one association per logical channel, and the processor, when determining the first data volume threshold, determines that logical-channel-specific association that corresponds to the logical channel to which the available small data is assigned and then determines the first data volume threshold from that determined logical-channel-specific association using the received data volume threshold index,
optionally wherein a high-priority logical channel for small-data transmission is associated with a higher data volume threshold than a low-priority logical channel for small-data transmission.

5. The UE according to any of claims 2 to 4, wherein the processor, when in operation, separately determines a second data volume threshold, usable for determining whether to perform a random-access-based transmission of the available small data in the inactive state,
wherein the processor determining the second data volume threshold includes:
• receiving a second data volume threshold index from the serving base station,
• determining the second data volume threshold from another association between a plurality of second data volume threshold indexes and a plurality of second data volume thresholds, using the receiving second data volume threshold index, and
optionally wherein
• in case a volume of the available small data is below the second data volume threshold, the processor, when in operation, determines the UE to stay in the inactive state for transmitting the available small data and the transmitter, when in operation, performs transmission of the available small data as part of a random access procedure performed between the UE and the serving base station, and
• in case the volume of the available small data is above the second data volume threshold, the processor, when in operation, determines the UE to transition to the connected sate for transmitting the available small data and the transmitter, when in operation, performs transmission of the available small data when the UE is in the connected state,
optionally wherein the random access procedure includes two steps, and the transmission of the available small data is performed with a first message of the two-step random access procedure, optionally wherein the random access procedure includes four steps, and the transmission of the available small data is performed with a third message of the four-step random access procedure.

6. The UE according to claim 1, wherein the processor determining the first data volume threshold includes:
• determining a value of a configuration parameter of periodic radio resources that are usable for transmission of small data without a prior scheduling request from the UE, the periodic radio resources being allocated in advance by the serving base station,
• determining the first data volume threshold from an association, associating a plurality of different data volume thresholds and different values of the configuration parameter of the allocated periodic radio resources, using the determined value of the configuration parameter of the periodic radio resources,
optionally wherein the configuration parameter of the periodic radio resources is a time periodicity of the periodic radio resources, or a size of the periodic radio resources in one or more of a frequency domain and time domain,
optionally wherein the association is such that the smaller a periodicity of the periodic radio resources is, the larger is the corresponding data volume threshold.

7. The UE according to claim 6, wherein the processor, when determining the first data volume threshold takes also into account a priority of the UE or a logical channel to which the available small data is assigned,
optionally wherein there is one association per UE priority or logical channel, and the processor, when determining the first data volume threshold, determines that association that corresponds to the UE priority or that corresponds to the logical channel to which the available small data is assigned, and wherein the processor then determines the first data volume threshold from that determined association using the determined value of the characteristic of the periodic radio resources,
optionally wherein a high-priority logical channel for small-data transmission is associated with a higher data volume threshold than a low-priority logical channel for small-data transmission,
optionally wherein a high-priority UE is associated with a higher data volume threshold than a low-priority UE.

8. The UE according to claim 6 or 7, wherein the UE obtains information on the association between the plurality of different data volume thresholds and different values of the characteristic of the allocated periodic radio resources from one or more of:
• system information broadcast by the serving base station, and
• information pre-configured in the UE.

9. The UE according to any of claims 1 to 8 wherein in case a volume of the available small data is below the first data volume threshold, the processor, when in operation, determines the UE to stay in the inactive state for transmitting the available small data and the transmitter, when in operation, performs transmission of the available small data using the allocated periodic radio resources,
and
wherein in case the volume of the available small data is above the first data volume threshold, the processor, when in operation, determines the UE to transition to the connected state for transmitting the available small data and the transmitter, when in operation, performs transmission of the available small data when the UE is in the connected state.

10. The UE according to any of claims 1 to 9, wherein the receiver, when in operation, receives a configured-grant enable/disable index from the serving base station,
the processor, when in operation, determines a value of a configuration parameter of periodic radio resources that are associated with the received configured-grant enable/disable index, based on a further association associating a plurality of configured-grant enable/disable indexes with different values of the configuration parameter of the periodic radio resources,
the processor, when in operation, determines whether to enable or disable periodic radio resources that have been allocated in advance to the UE by the serving base station and that are usable for transmitting small data, based on the determined value of the configuration parameter of periodic radio resources,
optionally wherein the configuration parameter of the periodic radio resources is a periodicity, and the processor disables the configured periodic radio resources, in case a periodicity of the configured periodic radio resources is smaller or larger than the periodicity indicated by the received configured-grant enable/disable index,
optionally wherein the processor keeps the configured periodic radio resources enabled, in case the periodicity of the configured periodic radio resources is equal to or larger than the periodicity indicated by the configured-grant enable/disable index,
optionally wherein the receiver, when in operation, receives the configured-grant enable/disable index in system information broadcast by the serving base station.

11. A method comprising the following steps performed by a user equipment, UE:
determining a first data volume threshold,
determining to transmit small data, that became available for transmission, in an inactive state or in a connected state, based on a volume of the available small data and the first data volume threshold, wherein the UE is in the inactive state out of the connected state, an idle state and the inactive state,
performing transmission of the available small data, and
wherein the first data volume threshold is to be used for determining whether to perform the transmission of available small data in the inactive state using periodic radio resources that are usable for transmission of small data without a prior scheduling request from the UE, the periodic radio resources being allocated in advance by a serving base station,
wherein the first data volume threshold is not to be used for determining whether to perform a random-access-based transmission of available small data in the inactive state.

12. A base station comprising:
a processor, which in operation, allocates periodic radio resources to one or more user equipments, UEs, the allocated periodic radio resources being usable by any one of the one or more UEs, for transmission of small data without a prior scheduling request,
the processor, when in operation, determines a plurality of data volume thresholds to be used by the UEs for determining whether to perform the transmission of small data in the inactive state using the allocated periodic radio resources, wherein the plurality of data volume thresholds are not to be used by the UEs for determining whether to perform a random-access-based transmission of small data in the inactive state,
a transmitter, which in operation, transmits information on the determined plurality of data volume thresholds to the UEs.

13. The base station according to claim 12, wherein the information on the determined plurality of data volume thresholds comprises an association between a plurality of data volume threshold indexes and the plurality of data volume thresholds, and
wherein the processor, when in operation, determines one among the plurality of data volume threshold indexes to be used by the UE and
the transmitter, when in operation, transmits the determined one data volume threshold index,
optionally wherein the determined data volume threshold index is transmitted in system information broadcast by the base station or in a message of the Medium Access Control, MAC, protocol from the base station.

14. The base station according to claim 13, wherein the processor, when in operation, determines the association to be specific to one UE,
optionally wherein the processor, when performing the determining of the UE-specific association, takes into account one or more of:
• a traffic pattern in the time domain of that UE,
• a priority of that UE,
• typical packet sizes received from that UE,
optionally wherein the transmitter, when in operation, transmits the information on the UE-specific association to the corresponding UE, optionally in a message of the Radio Resource Control, RRC, protocol.

15. The base station according to claim 12, wherein the information on the determined plurality of data volume thresholds comprises an association that associates a plurality of different data volume thresholds and different values of a configuration parameter of periodic radio resources that can be allocated to UEs in advance by the base station, these periodic radio resources being then usable by a UE to transmit small data without a prior scheduling request,
optionally wherein the configuration parameter of the periodic radio resources is a time periodicity of periodic radio resources, or a size of periodic radio resources in one or more of a frequency domain and time domain, optionally wherein the association is such that the smaller a periodicity of the periodic radio resources is, the larger is the corresponding data volume threshold,
optionally wherein the information on the association, which associates the plurality of different data volume thresholds and the different values of a characteristic of periodic radio resources, is transmitted by the base station using system information broadcast by the base station.
